# EUROPEAN PATENT SPECIFICATION

(11) **EP 2 654 440 B1**
(45) Date of publication and mention of the grant of the patent: **29.10.2014**
(21) Application number: 11813900.5
(22) Date of filing: 22.12.2011
(51) Int. Cl.: A23B 4/20, A23B 4/12, A23B 5/14, A23B 7/154, A23B 9/26, A23L 3/3472, A23L 3/3508, A23L 3/3526, A23L 3/3535, A23L 3/3544

(54) **MICROBICIDAL COMPOSITION**
MIKROBIZIDE ZUSAMMENSETZUNG
COMPOSITION MICROBICIDE

(30) Priority: 23.12.2010 US 201061426621 P; 26.09.2011 US 201161539283 P
(43) Date of publication of application: 30.10.2013
(73) Proprietor: DuPont Nutrition Biosciences ApS, 1001 Copenhagen K (DK)
(72) Inventor: FISCHER, Jana Theresa, 8220 Brabrand (DK); THOMPSON, Brett Wesley, New Century, KS 66031 (US)
(74) Representative: Alcock, David
(86) International application number: PCT/IB2011/055915
(87) International publication number: WO 2012/085881

(56) References cited:
- JP-A- 2 276 562
- JP-A- 2010 227 086
- US-A- 1 595 765
- US-A- 5 703 124
- US-A1- 2006 025 589
- Y. S. KIM: "Extension of Shelf Life by Treatment with Allyl Isothiocyanate in Combination with Acetic Acid on Cooked Rice", JOURNAL OF FOOD SCIENCE, vol. 67, no. 1, 1 January 2002 (2002-01-01), pages 274-279, XP55023607,
- YILMAZ ET AL: "Novel uses of catechins in foods", TRENDS IN FOOD SCIENCE AND TECHNOLOGY, ELSEVIER SCIENCE PUBLISHERS, GB, vol. 17, no. 2, 1 February 2006 (2006-02-01), pages 64-71, XP025081342, ISSN: 0924-2244, DOI: 10.1016/J.TIFS.2005.10.005 [retrieved on 2006-02-01]

## Description

The present invention relates to a composition that exhibits a microbicidal or microbiostatic action.

### Background

Food safety and prevention of food spoilage is an ever present concern worldwide, particularly with the increasing trend for convenience foods such as ready to eat meals, soups, sauces or snacks. Spoilage of food is a major economic problem for the food manufacturer. Food manufacturers need to protect the health and safety of the public by delivering products that are safe to eat. Such food must have a guaranteed shelf life, either at chilled or ambient temperature storage. Consumers prefer good tasting food of high quality - this is difficult to achieve with chemical preservatives, harsh heating regimes and other processing measures. Food safety and protection is best achieved with a multiple preservation system using a combined approach of milder processing and natural preservatives. Foodborne micro-organisms are also less able to adapt and grow in food preserved with different preservative measures.

There is much concern about food protection and the growth of food spoilage organisms such as *Zygosaccharomyces bailii.* This particular species is one of the most problematic spoilage yeasts and is often a major spoilage organism of fruit juices, sauces, carbonated soft drinks, salad dressings, mayonnaise and ketchup. The unusual physiological characteristics such as exceptional resistance toward antimicrobials are largely responsible for their ability to cause spoilage. Additionally, spoilage organisms can sometimes adapt to different preservatives and storage conditions, thus a combination of preservative measures can be more successful than individual measures.

There is an increasing need to develop economical, natural and effective preservative systems to meet the public demand for convenient, natural, safe, healthy, good quality products with guaranteed shelf life. Antimicrobial materials such as those derived from plants can be used as preservatives in food to help meet this need. Such plant extracts are considered to be desirable because they are regarded as being natural. Moreover from a regulatory point of view, because of long term usage, plant extracts typically have GRAS (generally regarded as safe) status. There is also a continuing to desire to provide microbial protection utilising lower amounts of antimicrobial materials. Thus there is a need to provide new antimicrobial materials or new more effective combinations of antimicrobial materials.

Despite their natural origins, it is desirable that anti microbial products from plants be used in the lowest possible amounts. This is desirable not only for reasons of cost but also to meet consumer desire to minimise the amount of 'additives' in foodstuffs. Moreover, many plant materials have an associated taste. Therefore in many demanding food applications reduction of the amount of protectant from plant origin is advantageous.

These and other aims are addressed by the present invention.

In one aspect the present invention provides a composition comprising (a) allyl isothiocyanate; and (b) an organic acid selected from acetic acid, propionic acid and mixtures thereof and further comprising (c) green tea [*Camellia sinensis*] extract.

In one aspect the present invention provides a process for preventing and/or inhibiting the growth of, and/or killing a micro-organism in a material, the process comprising the step of contacting the material with (a) allyl isothiocyanate; (b) an organic acid selected from acetic acid, propionic acid and mixtures thereof and (c) green tea [*Camellia sinensis*] extract.

In one aspect the present invention provides use of (a) allyl isothiocyanate; an organic acid selected from acetic acid, propionic acid and mixtures thereof; and (c) green tea [*Camellia sinensis*] extract; for preventing and/or inhibiting the growth of, and/or killing a micro-organism in a material.

In one aspect the present invention provides a kit for preparing a composition of the invention, the kit comprising; (a) allyl isothiocyanate; (b) an organic acid selected from acetic acid, propionic acid and mixtures thereof and further comprising (c) green tea *[Camellia sinensis]* extract in separate packages or containers; optionally with instructions for admixture and/or contacting and/or use.

In one aspect the present invention provides a foodstuff comprising a protectant composition comprising (a) allyl isothiocyanate; (b) an organic acid selected from acetic acid, propionic acid and mixtures thereof and further comprising (c) green tea [*Camellia sinensis*] extract.

Further aspects of the invention are defined herein and in the appended claims.

The present invention provides a synergistic combination of components for preventing and/or inhibiting the growth of, and/or killing a micro-organism in a material, such as foodstuff. This combination of components allows lower levels of constituent active agents, such as lower levels of (a) allyl isothiocyanate; and/or (b) an organic acid selected from acetic acid, propionic acid and mixtures thereof; and/or (c) green tea [*Camellia sinensis*] extract, to be used to provide effective action and prevent the development of tolerance to the antimicrobial material. This is particularly important in food applications where reduction of dosage and/or avoidance of development of tolerance is desired for commercial and regulatory reasons. Synergistic interaction is of particular interest because of the fact that with relatively small amounts of different compounds, thereby minimizing the impact of their negative properties, a relatively large antimicrobial effect can be achieved. Moreover, a combination of principal antimicrobials will help targeting a broader range of microbial organisms, since given the metabolic complexity of microbial cells, whether prokaryote (bacteria) or eukaryote (yeast and fungi), it is very unlikely for a single substance to affect all actions. Furthermore, resistance development of microbial populations against a combination of active compounds is less likely.

With regard to the specific material utilised in the present invention, namely (a) allyl isothiocyanate; (b) an organic acid selected from acetic acid, propionic acid and mixtures thereof and (c) green tea [*Camellia sinensis]* extract, each of the components has unfavourable properties. For example, the use of allyl isothiocyanate is currently limited owing its sinus irritating aroma with noticeable mustard flavour at extremely low concentrations. The use of green tea [*Camellia sinensis]* extract in high concentrations may face regulatory restrictions as Acceptable daily intake (ADI) values of component catechins need to be considered.

For ease of reference, these and further aspects of the present invention are now discussed under appropriate section headings. However, the teachings under each section are not necessarily limited to each particular section.

### PREFERRED ASPECTS

### ORGANIC ACID

As discussed herein the present invention utilises an organic acid selected from acetic acid, propionic acid and mixtures thereof

In one aspect the organic acid is acetic acid. In one aspect the organic acid is propionic acid. In one preferred aspect the organic acid is a mixture of acetic acid and propionic acid.

The acetic acid and/or propionic acid may be prepared by any known process or provided from any source. However, to provide these components from a natural source it is preferred that they are obtained from a cultured product. Therefore in one preferred aspect the organic acid is provided in the form of or from a culture ferment. In one preferred aspect the acetic acid is provided in the form of or from a culture ferment. In one preferred aspect the propionic acid is provided in the form of or from a culture ferment. In one preferred aspect the acetic acid and propionic acid is provided in the form of or from a culture ferment.

One skilled in the art would appreciate that the culture ferment may be of any suitable micro-organism to provide the desired organic acid(s). In one aspect the culture ferment is prepared from one or more strains selected from *Propionibacterium shermanii, Lactobacillus acidophilus; Propionibacterium acidipropionici* and combinations thereof. In one aspect the culture ferment is prepared from one or more strains of *Propionibacterium shermanii.* In one aspect the culture ferment is prepared from one or more strains of *Lactobacillus acidophilus.* In one aspect the culture ferment is prepared from one or more strains of *Propionibacterium acidipropionici.* In one aspect the culture ferment is prepared from a combination of one or more strains of *Propionibacterium acidipropionici* and one or more strains of *Lactobacillus acidophilus.*

Further suitable micro-organism from which the desired organic acid(s) may be prepared as a culture ferment include *Propionibacterium freudenreichii; Lactobacillus brevis, Lactobacillus casei, Lactobacillus paracasei, Lactobacillus bulgaricus, Lactobacillus buchneri, Lactobacillus cellobios, Lactobacillus farciminis, Lactobacillus curvatus, Lactobacillus delbruekii, Lactobacillus fermentum, Lactobacillus helveticus, Lactobacillus lactis, Lactobacillus plantarum, Lactobacillus sakei* and *Lactobacillus reuteri.*

A preferred culture ferment is a fermentate where the active components are acetic acid in an amount of 12 - 15 wt% based on the fermentate and propionic acid in an amount of 20 - 25 wt% based on the fermentate. A preferred culture ferment is a fermentate where the active components are acetic acid in an amount of 7 - 8 wt% based on the fermentate and propionic acid in an amount of 2.5 - 4 wt% based on the fermentate. A preferred culture ferment is a cultured dextrose product, where the active components are acetic acid in an amount of 7 - 8 wt% based on the fermentate and propionic acid in an amount of 2.5 - 4 wt% based on the fermentate.

The organic acid may be present in any amount to provide the required microbicidal or microbiostatic effect. This effect may typically be in the final material in which microbial growth is to be inhibited. Thus when the present invention provides a protectant composition the organic acid may be present in an amount such that when the composition is added to the material to be 'protected' in the directed amounts, the organic acid is present in an amount in the material to be protected to provide the required microbicidal or microbiostatic effect

In one aspect the organic acid is present in an amount to provide a microbicidal or microbiostatic effect.

In one aspect the composition is an antimicrobial protectant composition. In this and in other aspects preferably the composition comprises the organic acid in an amount of at least 0.5 wt.% based on the composition. The organic acid may be present in an amount of at least 1 wt.% based on the composition. The organic acid may be present in an amount of at least 2 wt.% based on the composition. The organic acid may be present in an amount of at least 3 wt.% based on the composition. The organic acid may be present in an amount of at least 5 wt.% based on the composition. Yet further the organic acid may be present in an amount of at least 6 wt. wt.% based on the composition. In these and in other aspects preferably the composition comprises the organic acid in an amount of no greater than 15 wt.% based on the composition. The organic acid may be present in an amount of no greater than 12 wt.% based on the composition. The organic acid may be present in an amount of no greater than 10 wt.% based on the composition. The organic acid may be present in an amount of no greater than 8 wt.% based on the composition. The organic acid may be present in an amount of no greater than 7 wt.% based on the composition. The composition may comprise the organic acid in an amount of 0.5 to 15 wt.% based on the composition. The composition may comprise the organic acid in an amount of 0.5 to 12 wt.% based on the composition. The organic acid may be present in an amount of 1 to 15 wt.% based on the composition. The organic acid may be present in an amount of 2 to 15 wt.% based on the composition. The organic acid may be present in an amount of 3 to 12 wt.% based on the composition. The organic acid may be present in an amount of 5 to 12 wt.% based on the composition. The organic acid may be present in an amount of 3 to 10 wt.% based on the composition. The organic acid may be present in an amount of 5 to 10 wt.% based on the composition. Yet further the organic acid may be present in an amount of 6 to 10 wt.% based on the composition.

In one aspect the composition is an antimicrobial protectant composition. In this and in other aspects preferably the composition comprises the acetic acid in an amount of at least 0.5 wt.% based on the composition. The acetic acid may be present in an amount of at least 1 wt.% based on the composition. The acetic acid may be present in an amount of at least 2 wt.% based on the composition. The acetic acid may be present in an amount of at least 2.5 wt.% based on the composition. The acetic acid may be present in an amount of at least 3 wt.% based on the composition. Yet further the acetic acid may be present in an amount of at least 4 wt. wt.% based on the composition. The composition may comprise the acetic acid in an amount of 0.5 to 10 wt.% based on the composition. The acetic acid may be present in an amount of 1 to 10 wt.% based on the composition. The acetic acid may be present in an amount of 2 to 10 wt.% based on the composition. The acetic acid may be present in an amount of 2.5 to 10 wt.% based on the composition. The acetic acid may be present in an amount of 3 to 8 wt.%. The acetic acid may be present in an amount of 5 to 8 wt.% The acetic acid may be present in an amount of 3 to 7 wt.% based on the composition. Yet further the acetic acid may be present in an amount of 4 to 6 wt.% based on the composition.

In one aspect the composition is an antimicrobial protectant composition. In this and in other aspects preferably the composition comprises the propionic acid in an amount of at least 0.1 wt.% based on the composition. The propionic acid may be present in an amount of at least 0.2 wt.% based on the composition. The propionic acid may be present in an amount of at least 0.5 wt.% based on the composition. The propionic acid may be present in an amount of at least 1.0 wt.% based on the composition. The propionic acid may be present in an amount of at least 1.2 wt.% based on the composition. Yet further the propionic acid may be present in an amount of at least 1.5 wt. wt.% based on the composition. The composition may comprise the propionic acid in an amount of 0.1 to 5 wt.% based on the composition. The propionic acid may be present in an amount of 0.2 to 5 wt.% based on the composition. The propionic acid may be present in an amount of 0.5 to 3 wt.% based on the composition. The propionic acid may be present in an amount of 1.0 to 3 wt.% based on the composition. The propionic acid may be present in an amount of 1.0 to 2.5 wt.% based on the composition. The propionic acid may be present in an amount of 1.0 to 2 wt.% based on the composition. The propionic acid may be present in an amount of 1.5 to 3 wt.% based on the composition. The propionic acid may be present in an amount of 1.5 to 2.5 wt.% based on the composition. The propionic acid may be present in an amount of 1.5 to 2 wt.% based on the composition. Yet further the propionic acid may be present in an amount of 4 to 6 wt.% based on the composition.

### GREEN TEA EXTRACT

As discussed herein the composition comprises green tea *[Camellia sinensis]* extract. It will be understood by one skilled in the art that all references herein to green tea extract mean an extract from a plant of the species *Camellia sinensis.*

It will be appreciated by one skilled in the art that by the term "extract" or "extracts" it is meant any constituent of the plant which may be isolated from the whole plant.

In a preferred aspect by the term green tea "extract" or "extracts" of it is meant a leaf of the plant or a constituent which may be isolated from the leaf of whole plant.

Numerous *in vitro* and *in vivo* studies have suggested the beneficial health properties of green tea (*Camellia sinensis*) and tea polyphenols including antioxidation, and antimicrobial activity [Kubo et al]. To summarise, catechins (flavonoids) are a major component of green tea. According to YAM *et. al.* (1997) are catechins and their gallates the main chemical moieties responsible for the antimicrobial activity of green tea extracts with the substances having *epi-* configuration being seemingly more active [Yam et al, Ikigai et al, Kajiya et al].

In one preferred aspect the green tea extract is a tea polyphenol. Preferably the green tea extract is a catechin. In a highly preferred aspect the green tea extract is a compound selected from 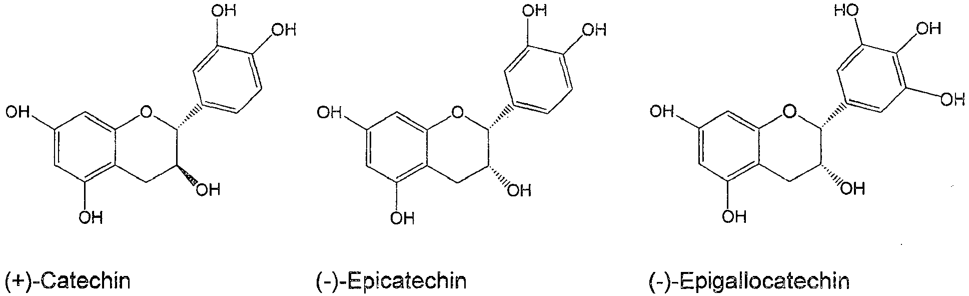 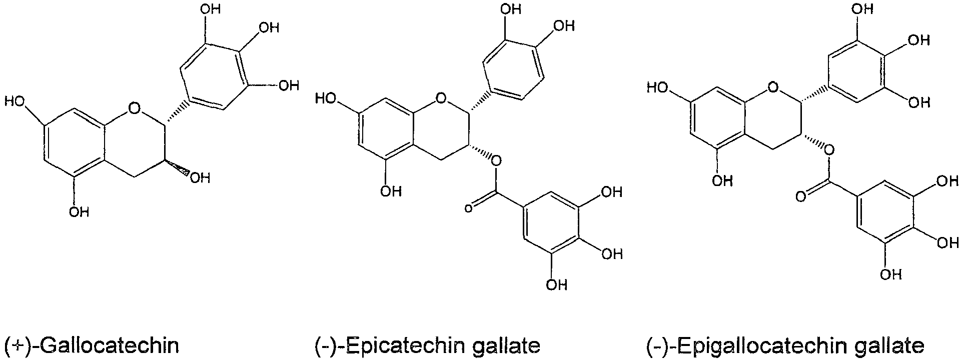 and mixtures thereof. These six compounds are referred to herein as green tea catechins or green tea extract catechins. Green tea extract contains these six catechins in a combined amount of approximately 75wt% based on the green tea extract. It will be appreciated by one skilled in the art that the above compounds while ideally are isolated from a green tea plant may be obtained by synthetic routes. Thus in one aspect the present invention may provide
- a composition comprising (a) allyl isothiocyanate; (b) an organic acid selected from acetic acid, propionic acid and mixtures thereof and further comprising (c) a compound selected from 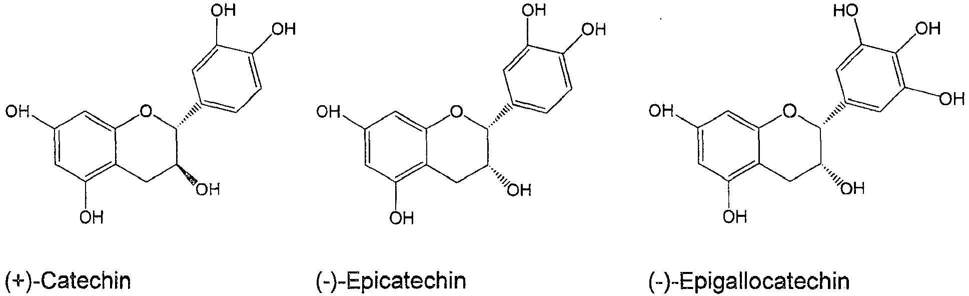 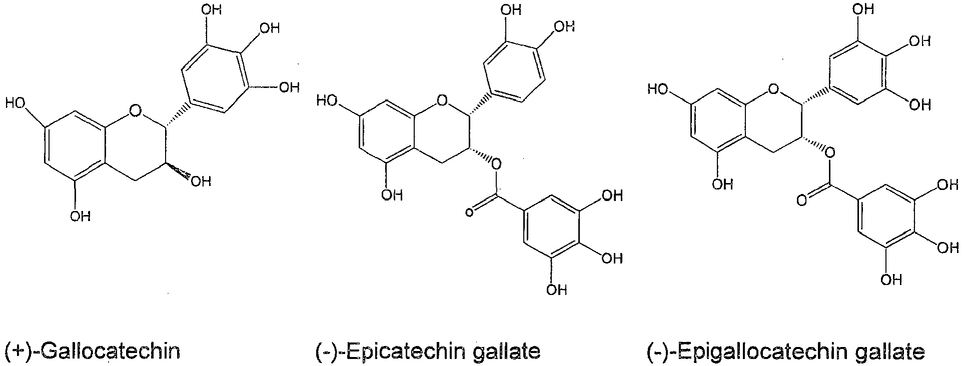 and mixtures thereof
- a process for preventing and/or inhibiting the growth of, and/or killing a microorganism in a material, the process comprising the step of contacting the material with (a) allyl isothiocyanate; (b) an organic acid selected from acetic acid, propionic acid and mixtures thereof and (c) a compound selected from 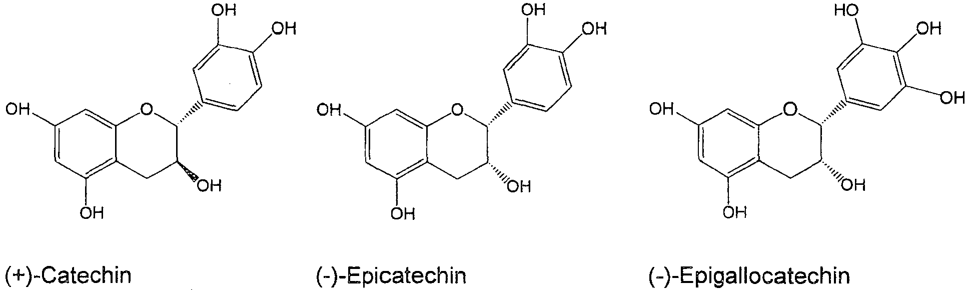 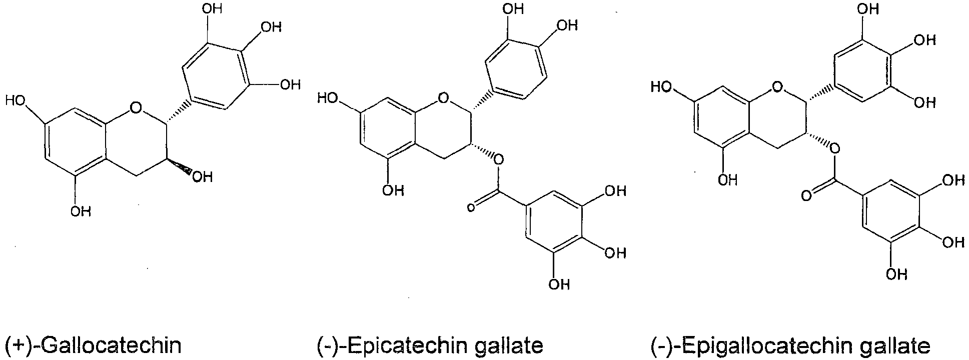 and mixtures thereof
- use of (a) allyl isothiocyanate; (b) an organic acid selected from acetic acid, propionic acid and mixtures thereof; and (c) a compound selected from 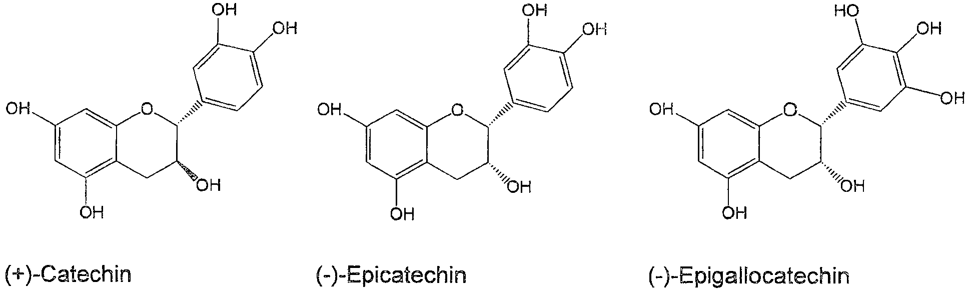 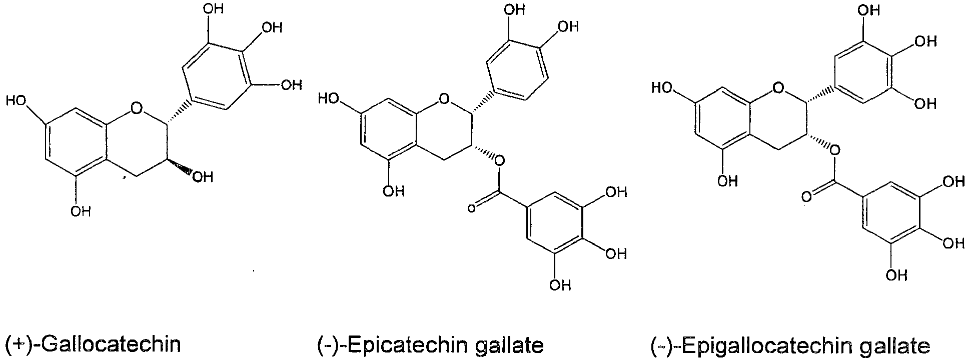 and mixtures thereof
   for preventing and/or inhibiting the growth of, and/or killing a micro-organism in a material.
- a kit for preparing a composition of the invention, the kit comprising; (a) allyl isothiocyanate; (b) an organic acid selected from acetic acid, propionic acid and mixtures thereof and further comprising (c) a compound selected from 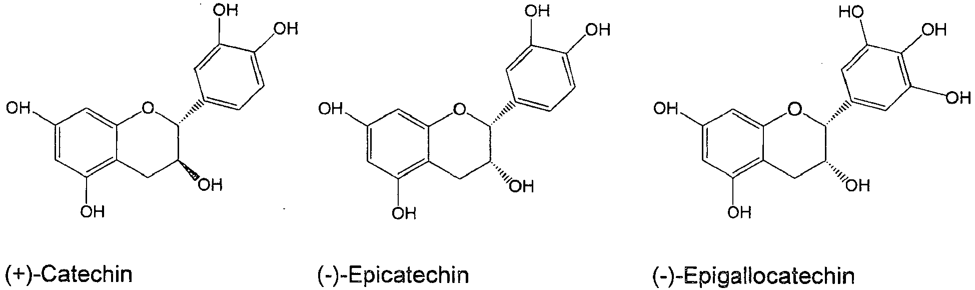 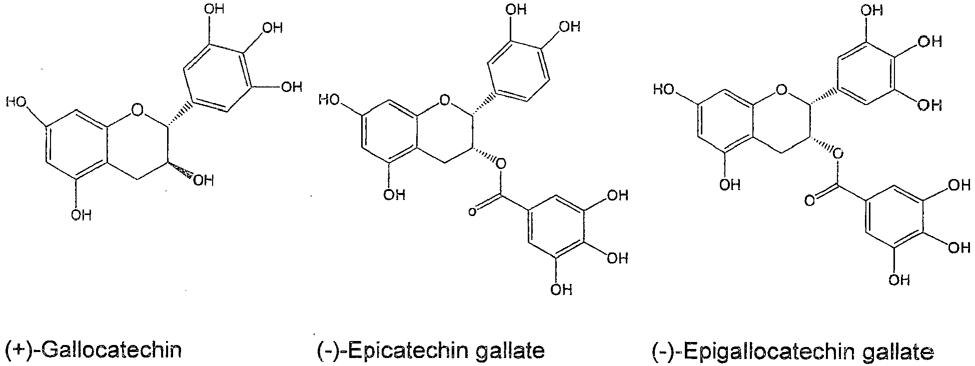 and mixtures thereof
   in separate packages or containers; optionally with instructions for admixture and/or contacting and/or use.
- a foodstuff comprising a protectant composition comprising (a) allyl isothiocyanate; (b) an organic acid selected from acetic acid, propionic acid and mixtures thereof and further comprising (c) a compound selected from 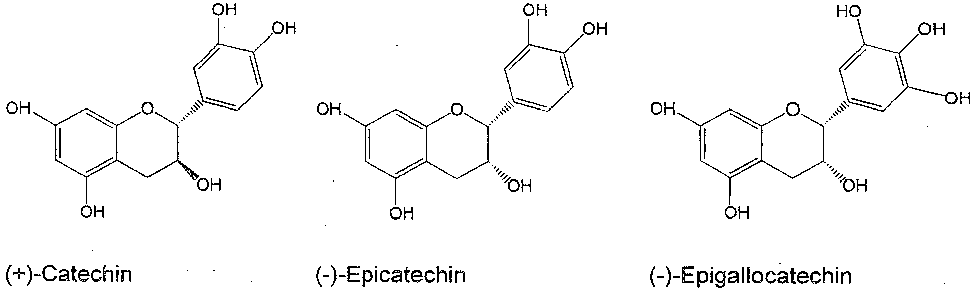 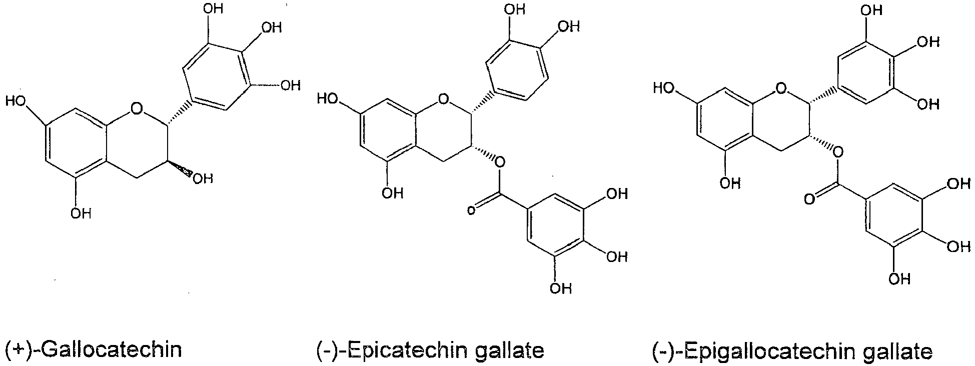 and mixtures thereof

The green tea extract may be present in any amount to provide the required microbicidal or microbiostatic effect. This effect may be typically be in the final material in which microbial growth is to be inhibited. Thus when the present invention provides a protectant composition the green tea extract may be present in an amount such that when the composition is added to the material to be 'protected' in the directed amounts, the green tea extract is present in an amount in the material to be protected to provide the required microbicidal or microbiostatic effect.

In one aspect the green tea extract is present in an amount to provide a microbicidal or microbiostatic effect.

It is appreciated by one skilled in the art that amounts of green tea extract are typically denoted by the amount of catechins provided by the green tea extract. Suitable amounts of green tea extract for use in the present invention are given below. In one preferred aspect the amounts of green tea extract recited herein are based on a green tea extract containing 75wt% catechins. In this aspect, one skilled in the art could modify the amounts recited herein should the green tea extract being used contain catechins in an amount of greater or less than 75wt%.

In one aspect the composition is an antimicrobial protectant composition. In this and in other aspects preferably the composition comprises the green tea extract in an amount of at least 0.1 wt.% based on the composition. The green tea extract may be present in an amount of at least 0.2 wt.% based on the composition. The green tea extract may be present in an amount of at least 0.5 wt.% based on the composition. The green tea extract may be present in an amount of at least 1.0 wt.% based on the composition. The green tea extract may be present in an amount of at least 1.5 wt.% based on the composition. Yet further the green tea extract may be present in an amount of at least 2.0 wt. wt.% based on the composition. The composition may comprise the green tea extract in an amount of 0.1 to 5 wt.% based on the composition. The green tea extract may be present in an amount of 0.2 to 5 wt.% based on the composition. The green tea extract may be present in an amount of 0.5 to 3 wt.% based on the composition. The green tea extract may be present in an amount of 1.0 to 3 wt.% based on the composition. The green tea extract may be present in an amount of 1.5 to 3 wt.% based on the composition.

In one aspect the composition is an antimicrobial protectant composition. In this and in other aspects preferably the composition comprises the green tea extract catechins, namely 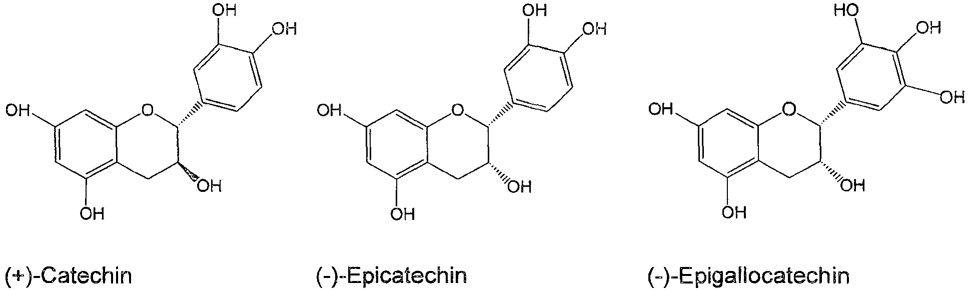 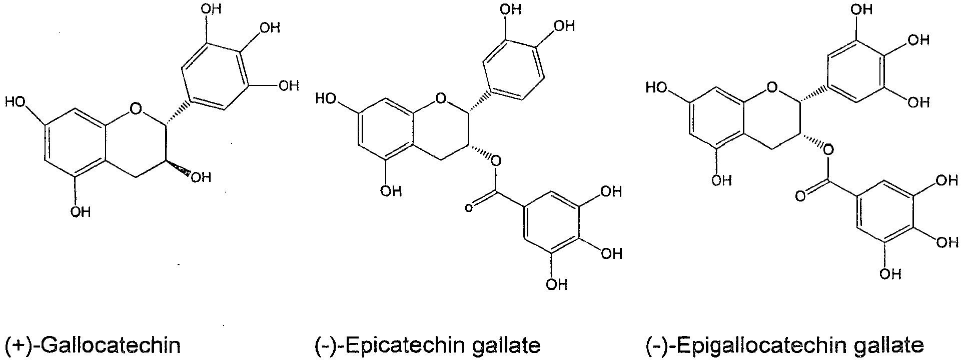 in a combined amount of at least 0.1 wt.% based on the composition. The green tea extract catechins may be present in a combined amount of at least 0.2 wt.% based on the composition. The green tea extract catechins may be present in a combined amount of at least 0.5 wt.% based on the composition. The green tea extract catechins may be present in a combined amount of at least 1.0 wt.% based on the composition. The green tea extract catechins may be present in a combined amount of at least 1.5 wt.% based on the composition. Yet further the green tea extract catechins may be present in a combined amount of at least 2.0 wt. wt.% based on the composition. The composition may comprise the green tea extract catechins in a combined amount of 0.1 to 5 wt.% based on the composition. The green tea extract catechins may be present in a combined amount of 0.2 to 3 wt.% based on the composition. The green tea extract catechins may be present in a combined amount of 0.5 to 3 wt.% based on the composition. The green tea extract catechins may be present in a combined amount of 1.0 to 3 wt.% based on the composition. The green tea extract catechins may be present in a combined amount of 1.5 to 2.5 wt.% based on the composition. The green tea extract catechins may be present in a combined amount of 2.0 to 2.5 wt.% based on the composition. The green tea extract catechins may be present in a combined amount of 2.1to 2.3 wt.% based on the composition.

### ALLYL ISOTHIOCYANATE

As discussed herein the composition comprises allyl isothiocyanate (AITC). The structure of allyl isothiocyanate is

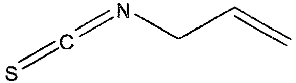

Allyl isothiocyanate may also referred to as mustard essential oils and is known to have bacterial- and fungistatic properties. Essential oils (EO) are generally hydrophobic liquids containing aromatic compounds. They exhibit antimicrobial activity, mainly due to their phenolic character. [3]. Thus in one aspect the allyl isothiocyanate is obtained from mustard seed. In one aspect the allyl isothiocyanate is obtained from seeds of black mustard (*Brassica nigra*) or brown Indian mustard (*Brassica juncea*).

In one aspect the composition is an antimicrobial protectant composition. In this and in other aspects preferably the composition comprises the allyl isothiocyanate in an amount of at least 0.01 wt.% based on the composition. The allyl isothiocyanate may be present in an amount of at least 0.05 wt.% based on the composition. The allyl isothiocyanate may be present in an amount of at least 0.1 wt.% based on the composition. The allyl isothiocyanate may be present in an amount of at least 0.15 wt.% based on the composition. The allyl isothiocyanate may be present in an amount of at least 0.2 wt.% based on the composition. Yet further the allyl isothiocyanate may be present in an amount of approximately 0.25 wt. wt.% based on the composition. The composition may comprise the allyl isothiocyanate in an amount of 0.01 to 1 wt.% based on the composition. The allyl isothiocyanate may be present in an amount of 0.05 to 1 wt.% based on the composition. The allyl isothiocyanate may be present in an amount of 0.1 to 1 wt.% based on the composition. The allyl isothiocyanate may be present in an amount of 0.1 to 0.5 wt.% based on the composition. The allyl isothiocyanate may be present in an amount of 0.2 to 0.5 wt.% based on the composition. The allyl isothiocyanate may be present in an amount of 0.2 to 0.4 wt.% based on the composition. Yet further the allyl isothiocyanate may be present in an amount of 0.2 to 0.3 wt.% based on the composition.

### COMPOSITION

The present invention provides a composition comprising
(a) allyl isothiocyanate;
(b) an organic acid selected from acetic acid, propionic acid and mixtures thereof; and
(c) green tea [C*amellia sinensis*] extract.

Each of the preferred amounts of each of (a), (b) and (c) may be combined to provide a preferred composition. In one aspect the composition comprises
- allyl isothiocyanate in an amount of at least 0.1 wt% based on the composition;
- acetic acid in an amount of at least 2 wt% based on the composition;
- propionic acid in an amount of at least 0.5 wt% based on the composition; and
- green tea extract in an amount of at least 1.0 wt% based on the composition.

A preferred composition comprises
(a) allyl isothiocyanate;
(b) an organic acid selected from acetic acid, propionic acid and mixtures thereof and
(c) green tea [*Camellia sinensis*] extract
in an amount to provide a microbicidal or microbiostatic synergistic effect in respect of yeast, mould or both yeast and mould. In a further preferred aspect the materials are present in an amount to provide a microbicidal or microbiostatic synergistic effect (i) in respect of yeast, mould or both yeast and mould and (ii) in respect of Gram negative bacteria.

The composition of the present invention may be used in any required application. In one aspect the composition is a protectant composition suitable for addition to a foodstuff.

The composition of the present invention or the composition for use in the present invention may contain one or more additional components. However, in some aspects the protectant composition of the present invention (suitable for addition to a foodstuff) contains no additional components or contains no additional components that materially affect the properties of the composition.

The composition of the present invention or the composition for use in the present invention may contain one or more additional components selected from cultures, byproducts of fermentation, bacteriocins, plant extracts, enzymes, organic acids and mixtures thereof. Preferred cultures include *Lactococcus lactis* fermentate and *Lactobacillus sakei* fermentate. Preferred refined metabolites include MicroGARD CS1-50, CM1-50, Nisaplin, Nisin, Pediocin and Sakacin. Preferred plant extracts are listed below. Preferred enzymes include egg white lysozyme. Preferred organic acids include lactic acid.

In one preferred aspect the composition further comprises a (further) plant extract. Preferably the plant extract is selected from hops extract (including alpha and beta acids, humolones and lupolones), rosemary extract (including carnosic acid), vanillin, cinnamon extract (including trans cinnamic aldehyde), pinbark extract, grape extract, resveratrol, pinosylvin, horse chestnut, sage, thymol, yucca extract, bilberry and citrus bioflavonoids.

In one preferred aspect the composition further comprises an emulsifier. Preferably the emulsifier is selected from polyoxy-ethylene sorbitan esters (E432-E436) otherwise known as polysorbates (e.g. Tween 80, Tween 20), monoglycerides, diglycerides, acetic acid esters of mono-diglycerides, tartaric acid esters of mono-diglycerides and citric acid esters of mono-diglycerides.

In one preferred aspect the composition further comprises a chelator. Preferably the chelator is selected from EDTA, citric acid, monophosphates, diphosphates, triphosphates and polyphosphates.

Further suitable chelator are taught in US 5573801 and include carboxylic acids, polycarboxylic acids, amino acids and phosphates. In particular, the following compounds and their salts may be useful:
Acetic acid, Adenine, Adipic acid, ADP, Alanine, B-Alanine, Albumin, Arginine, Ascorbic acid, Asparagine, Aspartic acid, ATP, Benzoic acid, n-Butyric acid, Casein, Citraconic acid, Citric acid, Cysteine, Dehydracetic acid, Desferri-ferrichrysin, Desferri-ferrichrome, Desferri-ferrioxamin E, 3,4-Dihydroxybenzoic acid, Diethylenetriaminepentaacetic acid (DTPA), Dimethylglyoxime, O,O-Dimethylpurpurogallin, EDTA, Formic acid, Fumaric acid, Globulin, Gluconic acid, Glutamic acid, Glutaric acid, Glycine, Glycolic acid, Glycylglycine, Glycylsarcosine, Guanosine, Histamine, Histidine, 3-Hydroxyflavone, Inosine, Inosine triphosphate, Iron-free ferrichrome, Isovaleric acid, Itaconic acid, Kojic acid, Lactic acid, Leucine, Lysine, Maleic acid, Malic acid, Methionine, Methylsalicylate, Nitrilotriacetic acid (NTA), Ornithine, Orthophosphate, Oxalic acid, Oxystearin, B-Phenylalanine, Phosphoric acid, Phytate, Pimelic acid, Pivalic acid, Polyphosphate, Proline, Propionic acid, Purine, Pyrophosphate, Pyruvic acid, Riboflavin, Salicylaldehyde, Salicyclic acid, Sarcosine, Serine, Sorbitol, Succinic acid, Tartaric acid, Tetrametaphosphate, Thiosulfate, Threonine, Trimetaphosphate, Triphosphate, Tryptophan, Uridine diphosphate, Uridine triphosphate, n-Valeric acid, Valine, vanillin, and Xanthosine

Many of the above sequestering agents are useful in food processing in their salt forms, which are commonly alkali metal or alkaline earth salts such as sodium, potassium or calcium or quaternary ammonium salts. Sequestering compounds with multiple valencies may be beneficially utilised to adjust pH or selectively introduce or abstract metal ions e.g. in a food system coating. Additional information chelators is disclosed in T. E. Furia (Ed.), CRC Handbook of Food Additives, 2nd Ed., pp. 271-294 (1972, Chemical Rubber Co.), and M. S. Peterson and A. M. Johnson (Eds.), Encyclopaedia of Food Science, pp. 694-699 (1978, AVI Publishing Company, Inc.) which articles are both hereby incorporated by reference.

The terms "chelator" is defined as organic or inorganic compounds capable of forming co-ordination complexes with metals. Also, as the term "chelator" is used herein, it includes molecular encapsulating compounds such as cyclodextrin or maltodextrin. The chelator may be inorganic or organic, but preferably is organic.

Preferred chelator are non-toxic to mammals and include aminopolycarboxylic acids and their salts such as ethylenediaminetetraacetic acid (EDTA) or its salts (particularly its di- and tri-sodium salts), and hydrocarboxylic acids and their salts such as citric acid. However, non-citric acid and non-citrate hydrocarboxylic acid chelators are also believed useful in the present invention such as acetic acid, formic acid, lactic acid, tartaric acid and their salts.

As noted above, the term "chelator" is defined and used herein as a synonym for sequestering agent and is also defined as including molecular encapsulating compounds such as cyclodextrin. Cyclodextrins are cyclic carbohydrate molecules having six, seven, or eight glucose monomers arranged in a donut shaped ring, which are denoted alpha, beta or gamma cyclodextrin, respectively. As used herein, cyclodextrin refers to both unmodified and modified cyclodextrin monomers and polymers. Cyclodextrin molecular encapsulators are commercially available from American Maize-Products of Hammond, Ind. Cyclodextrin are further described in Chapter 11 entitled, "Industrial Applications of Cyclodextrin", by J. Szejtli, page 331-390 of Inclusion Compounds, Viol. III (Academic Press, 1984) which chapter is hereby incorporated by reference.

In one preferred aspect the allyl isothiocyanate is complexed with cyclodextrin. In this aspect the allyl isothiocyanate is then readily provided in the form of a powder.

In one preferred aspect the organic acid is mixed with maltodextrin.

In one preferred aspect the green tea extract is mixed with maltodextrin. In this aspect the green tea extract may be more readily provided in a standardised form.

Preferably the chelator enhances the antimicrobial activity and/or antimicrobial spectrum of the antimicrobial material. More preferably the chelator enhances the antimicrobial activity and/or antimicrobial spectrum of the antimicrobial material in respect of Gram-negative bacteria and other micro-organisms.

In one preferred aspect the composition further comprises a lytic enzyme. Preferably the lytic enzyme is a lysozyme.

### MICRO-ORGANISMS

In the context of the present invention the term "antimicrobial" is intended to mean that there is a bactericidal and/or a bacteriostatic and/or fungicidal and/or fungistatic effect and/or a virucidal effect, wherein

The term "bactericidal" is to be understood as capable of killing bacterial cells.

The term "bacteriostatic" is to be understood as capable of inhibiting bacterial growth, i.e. inhibiting growing bacterial cells.

The term "fungicidal" is to be understood as capable of killing fungal cells.

The term "fungistatic" is to be understood as capable of inhibiting fungal growth, i.e. inhibiting growing fungal cells.

The term "virucidal" is to be understood as capable of inactivating virus.

The term "microbial cells" denotes bacterial or fungal cells, and the term microorganism denotes a fungus (including yeasts) or a bacterium.

In the context of the present invention the term "inhibiting growth of microbial cells" is intended to mean that the cells are in the non-growing state, i.e., that they are not able to propagate.

As discussed herein the present invention may prevent and/or inhibit the growth of, and/or kill a micro-organism in a material. This may be slowing or arresting a micro-organism, such as bacteria, or by killing the micro-organism present on contact with the present composition.

In a highly preferred aspect the microbicidal or microbiostatic effect is a bactericidal or bacteriostatic effect.

It is advantageous for the microbicidal or microbiostatic effect to be in respect of in respect of yeast, mould or both yeast and mould.. Preferably the microbicidal or microbiostatic effect is (i) in respect of yeast, mould or both yeast and mould and (ii) in respect of Gram negative bacteria.

In a preferred aspect the microbicidal or microbiostatic effect is in respect of an organism selected from species of *Zygosaccharomyces balii, Candida parapsilosis, Candida tropicalis, Aspergillus spp., Aspergillus parasiticus, Penicillum spp.* and *Pseudomonas fluorescens.*

In a preferred aspect the microbicidal or microbiostatic effect is in respect of an organism selected from species of *Zygosaccharomyces balii, Candida tropicalis, Aspergillus parasiticus* and *Pseudomonas fluorescens.*

### FOODSTUFF

The composition, process and use of the present invention may prevent and/or inhibit the growth of, and/or kill a micro-organism in any material. However, in view of the problems associated with spoilage and contamination of foodstuffs and in view of the particular effectiveness of the present invention in foodstuffs, preferably the composition is a foodstuff or may be added to a foodstuff. The components may have been added to the foodstuff sequentially. In one further aspect one or more of the components may have be formed *in situ* in the foodstuff. For example the organic acid and/or AITC may be formed *in situ* in the foodstuff.

The present invention may further encompass the use of an antimicrobial composition as defined herein in food and/or feed enzyme compositions, and may encompass food and/or feed compositions comprising an antimicrobial composition as defined herein. Such compositions may contain one or more further food ingredient or additives. By formulation of the antimicrobial composition of the invention within a food and/or feed composition, the composition can be stabilised to allow for prolonged storage (under suitable conditions) prior to use in food and/or feed production. In addition the antimicrobial composition of the present invention provides antimicrobials in a suitable form for safe use for the application in the preparation of foodstuffs and/or feedstuffs, or ingredients for use in food and/or feed preparation. Such compositions may be in either liquid, semi-liquid, crystalline, salts or solid/granular form.

In one aspect the composition of the present invention is an antimicrobial protectant composition suitable for addition to a foodstuff.

Many foodstuffs may be protected by the present invention. Typical foodstuffs are:
Table sauces - sauces that are used as table sauces, including sauces that are multipurpose and can be used as table sauces, marinade and/or cooking sauce (e.g. during stir-frying, steaming, etc), such as salsa, including fresh salsa, or barbeque (BBQ) sauce. Various types of fermented sauces exist in different regions and different variants are included for each country. Examples include brown sauce, chilli, Worcester, plum, mint sauce for meat, tartar sauce, apple sauce for meat, horse radish, cranberry sauce for meat, etc. and oyster, hoisin, etc
Soy based sauces - Soy-based fermented sauces. Examples include dark soy sauce and light soy sauce blended soy-based sauces, e.g. - teriyaki (soy sauce blended with added sugar and mirin) - sukiyaki (with added sugar, mirin and stock) - yakitori (with added mirin, sake, sugar)
Pasta sauces - either added directly to cooked pasta or heated up for a few minutes beforehand, or alternatively added to fresh ingredients, e.g. meat or vegetables, and heated up to make a sauce which will then be added to cooked pasta. Examples include Bolognese, carbonara, mushroom, tomato, vegetable, pesto, etc.
Wet/cooking sauces - Liquid (i.e. non- dehydrated) recipe cooking sauces/pastes that are added to ingredients (meat and/or vegetables) to produce a meal. This includes recipe sauces/pastes that could be added before the cooking process (marinades) and/or during the cooking process (e.g. steaming, grilling, stir-frying, stewing, etc).
Dry sauces/powder mixes - Dry sauces to which boiling water or milk is added before consumption. Dry recipe powder mixes and dry powder marinades are included here. Some dry sauces may require heating over the stove for the sauce to thicken after water/milk is added. Examples include Flollandaise sauce, white sauce, pepper sauce, sweet and sour sauce, spaghetti bolognaise, etc.
Regular salad dressings (Standard ready-made) Dried salad dressings (i.e. powders packaged in sachets that are mixed with oil/vinegar) are also included though they are not in ready-to-eat form. Examples include oil-based products, thousand island, blue cheese, Caesar, salad cream, ranch dressing, etc.
Low fat salad dressings Examples include oil-based products, thousand island, blue cheese, Caesar, salad cream, ranch dressing, etc.
Vinaigrettes Includes all vinegar-based salad dressings. Examples include vinaigrette Other sauces, dressings and condiments Examples include 1) Non-fermented table sauces 2) Wasabi 3) Non-recipe purees, pastes (e.g. garlic purees/pastes) 4) Dry marinades 5) Dry recipe powder mixes (e.g. fajita spice mix) 5) Dehydrated recipe batter/coating (used for cooking e.g. deep frying, grilling, baking).
Soups: Canned soup - Includes all varieties of canned soup in ready-to-eat or condensed (with water to be added) form. Ready-to-eat or condensed soup in bricks" or retort pouches are also categorised as UHT soup. Examples include mixed vegetables, pea, leek, fish, mushrooms, tomato, chicken soup, meat soup, beef soup, chicken & mushrooms, Eintöpfe, etc.
Dehydrated soup - Powdered soup to which water is added, and then cooked for a number of minutes before consumption.
Instant soup - Powdered soup to which boiling water is added just before consumption. Chilled soup Soup made from fresh ingredients and stored in chilled cabinets. These products usually have a limited shelf life
UHT soup Includes all varieties of soup in ready-to-eat or condensed (with water to be added) form sold ambient (i.e. not stored in chilled cabinets) Product types include mixed vegetables, pea, leek, fish, mushrooms, tomato, chicken soup, meat soup, beef soup, chicken & mushrooms
Frozen soup Includes all varieties of soup sold in frozen form. Product types include mixed vegetables, pea, leek, fish, mushrooms, tomato, chicken soup, meat soup, beef soup, chicken & mushrooms, Eintöpfe, etc.

Further application areas include
- baked goods, including fine bakery products, intermediate and high moisture fine bakery products such as muffins, tortillas, waffles, pancakes, pizzas, pastry, sponge cakes and the like,
- beverages, include fruit containing, vegetable containing and dairy containing beverages
- dairy products including yogurt, sour cream, cheeses, cottage cheese
- fruit preparations, jams, jellies, preserves
- refrigerated and frozen prepared meals (meat/vegetable/grain containing), dips (vegetable/dairy/grain containing), deli salads and other prepared side items (meat/vegetable/grain containing).

In one aspect the foodstuff is selected from salsa, barbeque (BBQ) sauce and ranch dressing. In one aspect the foodstuff is salsa. In one aspect the foodstuff is barbeque (BBQ) sauce. In one aspect the foodstuff is ranch dressing.

The term "foodstuff" as used herein means a substance which is suitable for human and/or animal consumption.

Suitably, the term "foodstuff" as used herein may mean a foodstuff in a form which is ready for consumption. Alternatively or in addition, however, the term foodstuff as used herein may mean one or more food materials which are used in the preparation of a foodstuff. By way of example only, the term foodstuff encompasses both baked goods produced from dough as well as the dough used in the preparation of said baked goods.

In another aspect, the foodstuff in accordance with the present invention may be an animal feed. Suitably, the animal feed may be a pet food. The foodstuff in accordance with the present invention may be an animal feed selected from liquid palatants and palatability enhancers, dry palatability enhancers, treats (especially semi-moist treats), kibbles and feeds.

In one aspect preferably the foodstuff is selected from one or more of the following: ready to eat processed meals, for example ready to eat pastas, ready to eat pasta sauces, ready to eat meats, ready to eat vegetable and ready to eat vegetable sauces, ready to eat 'side' dishes such as deli salads and in particular coleslaw, chicken salad, potato salad; and vinaigrettes, dressings and sauces, and in particular barbeque sauces, tomato-based sauces, pasta sauces and salad dressings.

Preferably the foodstuff according to the present invention is a water containing foodstuff. Suitably the foodstuff may be comprised of 10-99% water, suitably 14-99%, suitably of 18-99% water, suitably of 20-99%, suitably of 40-99%, suitably of 50-99%, suitably of 70-99%, suitably of 75-99%.

The antimicrobial composition is typically incorporated into the foodstuff by contacting the antimicrobial composition with food ingredients to produce a protected foodstuff. This may occur during normal production of the foodstuff. In further aspects, the antimicrobial composition can be applied to the foodstuff by dipping, or surface coating the foodstuff either by spraying the composition on the surface of the food or by applying the composition to castings or coatings or eatable films.

In a further aspect, the composition can be mixed into the foodstuff.

In one aspect the foodstuff may comprise the composition in an amount of no greater than 30,000ppm based on the foodstuff. In one aspect the foodstuff may comprise the composition in an amount of no greater than 15,000ppm based on the foodstuff. In one aspect the foodstuff may comprise the composition in an amount of no less than 1,000ppm based on the foodstuff. In one aspect the foodstuff may comprise the composition in an amount of no less than 2,500ppm based on the foodstuff. For example the foodstuff or antimicrobial protected material may comprise
- the composition in an amount of no greater than 25,000 ppm based on the foodstuff, or
- the composition in an amount of no greater than 20,000 ppm based on the foodstuff, or
- the composition in an amount of no greater than 15,000 ppm based on the foodstuff, or
- the composition in an amount of no greater than 10,000 ppm based on the foodstuff, or
- the composition in an amount of no greater than 7,500 ppm based on the foodstuff, or
- the composition in an amount of no less than 500 ppm based on the foodstuff, or
- the composition in an amount of no less than 1,000 ppm based on the foodstuff, or
- the composition in an amount of no less than 2,000 ppm based on the foodstuff, or
- the composition in an amount of no less than 3,000 ppm based on the foodstuff, or
- the composition in an amount of no less than 5,000 ppm based on the foodstuff, or
- the composition in an amount of 2,500 to 30,000 ppm based on the foodstuff, or
- the composition in an amount of 5,000 to 20,000 ppm based on the foodstuff, or
- the composition in an amount of 1,000 to 15,000 ppm based on the foodstuff, or
- the composition in an amount of 5,000 to 15,000 ppm based on the foodstuff, or
- the composition in an amount of approximately 10,000 ppm based on the foodstuff, or
- the allyl isothiocyanate in an amount of no greater than 150 ppm based on the foodstuff, or
- the allyl isothiocyanate in an amount of no greater than 100ppm based on the foodstuff, or
- the allyl isothiocyanate in an amount of no greater than 50 ppm based on the foodstuff, or
- the allyl isothiocyanate in an amount of no greater than 40 ppm based on the foodstuff, or
- the allyl isothiocyanate in an amount of no greater than 37.5ppm based on the foodstuff, or
- the allyl isothiocyanate in an amount of no less than 2 ppm based on the foodstuff, or
- the allyl isothiocyanate in an amount of no less than 2.5 ppm based on the foodstuff, or
- the allyl isothiocyanate in an amount of no less than 5 ppm based on the foodstuff, or
- the allyl isothiocyanate in an amount of no less than 10 ppm based on the foodstuff, or
- the allyl isothiocyanate in an amount of no less than 15 ppm based on the foodstuff, or
- the allyl isothiocyanate in an amount of no less than 20 ppm based on the foodstuff, or
- the allyl isothiocyanate in an amount of no less than 25 ppm based on the foodstuff, or
- the allyl isothiocyanate in an amount of 20 to 150ppm based on the foodstuff, or
- the allyl isothiocyanate in an amount of 20 to 100ppm based on the foodstuff, or
- the allyl isothiocyanate in an amount of 25 to 50ppm based on the foodstuff, or
- the allyl isothiocyanate in an amount of 2 to 40ppm based on the foodstuff, or
- the allyl isothiocyanate in an amount of 2.5 to 37.5ppm based on the foodstuff, or
- the allyl isothiocyanate in an amount of approximately 35 ppm based on the foodstuff, or
- the organic acid in an amount of no greater than 12,000ppm based on the foodstuff, or
- the organic acid in an amount of no greater than 10,000 ppm based on the foodstuff, or
- the organic acid in an amount of no greater than 5,000 ppm based on the foodstuff, or
- the organic acid in an amount of no greater than 2,000 ppm based on the foodstuff, or
- the organic acid in an amount of no greater than 1,500 ppm based on the foodstuff, or
- the organic acid in an amount of no greater than 1,300 ppm based on the foodstuff, or
- the organic acid in an amount of no greater than 1,275 ppm based on the foodstuff, or
- the organic acid in an amount of no greater than 1,200 ppm based on the foodstuff, or
- the organic acid in an amount of no less than 20 ppm based on the foodstuff, or
- the organic acid in an amount of no less than 40 ppm based on the foodstuff, or
- the organic acid in an amount of no less than 60 ppm based on the foodstuff, or
- the organic acid in an amount of no less than 80 ppm based on the foodstuff, or
- the organic acid in an amount of no less than 85 ppm based on the foodstuff, or
- the organic acid in an amount of no less than 100 ppm based on the foodstuff, or
- the organic acid in an amount of no less than 200 ppm based on the foodstuff, or
- the organic acid in an amount of no less than 500 ppm based on the foodstuff, or
- the organic acid in an amount of no less than 1,000 ppm based on the foodstuff, or
- the organic acid in an amount of 200 to 12,000 ppm based on the foodstuff, or
- the organic acid in an amount of 500 to 10,000 ppm based on the foodstuff, or
- the organic acid in an amount of 1,000 to 5,000 ppm based on the foodstuff, or
- the organic acid in an amount of 80 to 1,500 ppm based on the foodstuff, or
- the organic acid in an amount of 85 to 1,275 ppm based on the foodstuff, or
- the organic acid in an amount of approximately 1,150 ppm based on the foodstuff, or
- the acetic acid in an amount of no greater than 5,000 ppm based on the foodstuff, or
- the acetic acid in an amount of no greater than 2,000 ppm based on the foodstuff, or
- the acetic acid in an amount of no greater than 1,000 ppm based on the foodstuff, or
- the acetic acid in an amount of no greater than 900 ppm based on the foodstuff, or
- the acetic acid in an amount of no less than 50 ppm based on the foodstuff, or
- the acetic acid in an amount of no less than 60 ppm based on the foodstuff, or
- the acetic acid in an amount of no less than 100 ppm based on the foodstuff, or
- the acetic acid in an amount of no less than 200 ppm based on the foodstuff, or
- the acetic acid in an amount of no less than 500 ppm based on the foodstuff, or
- the acetic acid in an amount of 100 to 5,000ppm based on the foodstuff, or
- the acetic acid in an amount of 200 to 2,000ppm based on the foodstuff, or
- the acetic acid in an amount of 500 to 1,000ppm based on the foodstuff, or
- the acetic acid in an amount of 60 to 1,000ppm based on the foodstuff, or
- the acetic acid in an amount of 60 to 900ppm based on the foodstuff, or
- the acetic acid in an amount of approximately 800 ppm based on the foodstuff, or
- the propionic acid in an amount of no greater than 5,000 ppm based on the foodstuff, or
- the propionic acid in an amount of no greater than 2,000 ppm based on the foodstuff, or
- the propionic acid in an amount of no greater than 1,000 ppm based on the foodstuff, or
- the propionic acid in an amount of no greater than 750 ppm based on the foodstuff, or
- the propionic acid in an amount of no greater than 500 ppm based on the foodstuff, or
- the propionic acid in an amount of no greater than 400 ppm based on the foodstuff, or
- the propionic acid in an amount of no greater than 375 ppm based on the foodstuff, or
- the propionic acid in an amount of no less than 20 ppm based on the foodstuff, or
- the propionic acid in an amount of no less than 25 ppm based on the foodstuff, or
- the propionic acid in an amount of no less than 50 ppm based on the foodstuff, or
- the propionic acid in an amount of no less than 100 ppm based on the foodstuff, or
- the propionic acid in an amount of no less than 200 ppm based on the foodstuff, or
- the propionic acid in an amount of no less than 300 ppm based on the foodstuff, or
- the propionic acid in an amount of 100 to 5,000ppm based on the foodstuff, or
- the propionic acid in an amount of 200 to 2,000ppm based on the foodstuff, or
- the propionic acid in an amount of 300 to 1,000ppm based on the foodstuff, or
- the propionic acid in an amount of 20 to 400ppm based on the foodstuff, or
- the propionic acid in an amount of 25 to 375 based on the foodstuff, or
- the propionic acid in an amount of approximately 350 ppm based on the foodstuff, or
- the green tea extract (when comprising 75% catechins) in an amount of no greater than 300 ppm based on the foodstuff, or
- the green tea extract (when comprising 75% catechins) in an amount of no greater than 200 ppm based on the foodstuff, or
- the green tea extract (when comprising 75% catechins) in an amount of no greater than 150 ppm based on the foodstuff
- the green tea extract (when comprising 75% catechins) in an amount of no less than 10 ppm based on the foodstuff
- the green tea extract (when comprising 75% catechins) in an amount of no less than 15 ppm based on the foodstuff
- the green tea extract (when comprising 75% catechins) in an amount of no less than 100 ppm based on the foodstuff
- the green tea extract (when comprising 75% catechins) in an amount of no less than 120 ppm based on the foodstuff
- the green tea extract (when comprising 75% catechins) in an amount of no less than 130 ppm based on the foodstuff
- the green tea extract (when comprising 75% catechins) in an amount of 100 to 300ppm based on the foodstuff
- the green tea extract (when comprising 75% catechins) in an amount of 10 to 200ppm based on the foodstuff
- the green tea extract (when comprising 75% catechins) in an amount of 15 to 200ppm based on the foodstuff
- the green tea extract (when comprising 75% catechins) in an amount of 120 to 200ppm based on the foodstuff
- the green tea extract (when comprising 75% catechins) in an amount of 130 to 150 based on the foodstuff
- the green tea extract in an amount of approximately 135 ppm based on the foodstuff.

In one aspect the foodstuff may comprise the composition in an amount such that after processing, and in particular after heating, the foodstuff comprises the composition in the above amounts. It is understood by one skilled in the art that processing of a foodstuff, and in particular heating, may diminish the amount of active protectant composition. Thus in one aspect the foodstuff may comprise the composition in an amount of no greater than 30,000 ppm based on the foodstuff, wherein the foodstuff is optionally subjected subsequent processing, and in particular heating. For example the foodstuff or antimicrobial protected material may comprise
- the composition in an amount of no greater than 25,000 ppm based on the foodstuff, or
- the composition in an amount of no greater than 20,500 ppm based on the foodstuff, or
- the composition in an amount of no greater than 15,000 ppm based on the foodstuff, or
- the allyl isothiocyanate in an amount of no greater than 100 ppm based on the foodstuff, or
- the allyl isothiocyanate in an amount of no greater than 75 ppm based on the foodstuff, or
- the allyl isothiocyanate in an amount of no greater than 60 ppm based on the foodstuff, or
- the organic acid in an amount of no greater than 36,000 ppm based on the foodstuff, or
- the organic acid in an amount of no greater than 30,000 ppm based on the foodstuff, or
- the organic acid in an amount of no greater than 24,000 ppm based on the foodstuff, or
- the acetic acid in an amount of no greater than 24,000 ppm based on the foodstuff, or
- the acetic acid in an amount of no greater than 18,000 ppm based on the foodstuff, or
- the acetic acid in an amount of no greater than 12,000 ppm based on the foodstuff, or
- the propionic acid in an amount of no greater than 18,000 ppm based on the foodstuff, or
- the propionic acid in an amount of no greater than 12,000 ppm based on the foodstuff, or
- the propionic acid in an amount of no greater than 6,000 ppm based on the foodstuff, or
- the green tea extract in an amount of no greater than 675 ppm based on the foodstuff, or
- the green tea extract in an amount of no greater than 375 ppm based on the foodstuff, or
- the green tea extract in an amount of no greater than 300 ppm based on the foodstuff,
wherein the foodstuff is optionally subjected to subsequent processing, and in particular heating.

### PROCESS

As discussed herein in one aspect the present invention provides a process for preventing and/or inhibiting the growth of, and/or killing a micro-organism in a material, the process comprising the step of contacting the material with
(a) allyl isothiocyanate;
(b) an organic acid selected from acetic acid, propionic acid and mixtures thereof; and
(c) green tea [*Camellia sinensis*] extract.

In one aspect the contact with the material is simultaneous. In one aspect the contact with the material is sequential.

As discussed herein in one aspect the present invention provides use of
(a) allyl isothiocyanate;
(b) an organic acid selected from acetic acid, propionic acid and mixtures thereof; and
(c) green tea [*Camellia sinensis*] extract;
for preventing and/or inhibiting the growth of, and/or killing a micro-organism in a material.

The present invention will now be described in further detail by way of example only with reference to the accompanying figures in which:-

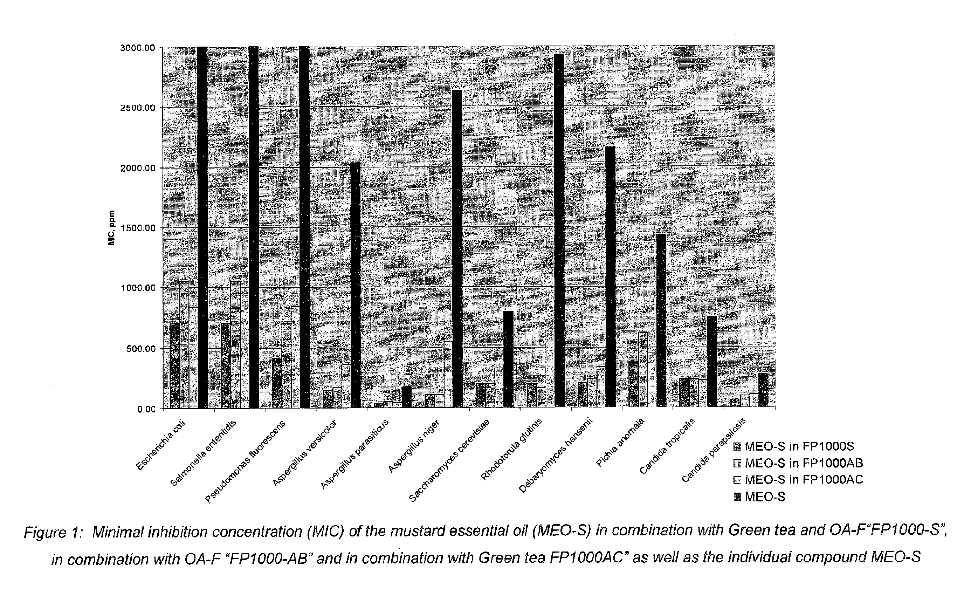

Figures 1 to 8 are graphs.

The present invention will now be described in further detail in the following examples.

### EXAMPLES

### Sample material

Table 1 lists the different compounds and combinations thereof used in this research which were obtained from commercial sources and then blended.

**Table 1: Sample list**

| Sample-ID | | | Sample Description |
|---|---|---|---|
| A523 | MEO-S | Powder | Mustard essential oil (25%), Arabic gum, maize starch; modified starch, vanillin |
| A63 | OA-F (organic acid fermentate) | Powder | Organic acid fermentate containing Acetic acid (7 - 8%) and propionic acid (2.5 - 4%) |
| A165 | GTE | Powder | Green tea extract containing 75% total catechins |
| A533 | FP100Q-S* | Powder | MEO-S (to provide 0.35%AITC); GTE (to provide 2.25% total catechins); OA-F (70%) |
| A573 | FP1000-AB | Powder | MEO-S (to provide 0.35%AITC); OA-F (70% of FP1000-AB to provide organic acids in amount of 6.65 to 8.4%) |
| A574 | FP1000-AC | Powder | MEO-S (to provide 0.35%AITC); GTE (to provide 2.25% total catechins) |
| A575 | FP1000-BC | Powder | GTE (to provide 2.25% total catechins); OA-F (70%) |

| | | | |
|---|---|---|---|
| *Concentrations used in the formulation were based on regulatory restriction and sensory limitations The %s given for each of the FP1000 mixtures is based on the total weight of the mixture. | | | |

### Preparation of bacterial cultures

The target strains used for assessment of antimicrobial activity are isolates of different origin e.g. food spoilage isolates, spoilage organisms provided by a customer, national strain collections (e.g. DSMZ, ATCC) collected in the in house Danisco Culture Collection (DCS) (Danisco, Brabrand, Denmark), maintained at -86°C in suitable broth containing glycerol 50% (v/v). The strains were chosen to represent Gram negative and fungal strains. All species used were aerobic. Before each experiment, stock cultures were propagated through two consecutive growth cycles in suitable media and temperature. The overnight cultures are diluted in saline solution to obtain working cultures.

Mould spore inoculums were prepared as follows: approx. 2 ml of sterile demineralised water was used to wash the spores off an out-grown mould (minimum 5 day old plate). This suspension is transferred to a sterile container.

Yeast and mould strains were incubated at 25°C, and bacterial isolates were grown at 30°C under aerobic conditions depending on the preferred conditions for the particular strain (Method no AP-002).

**Table 2: Tested indicator strains**

| Strain | No. | Growth condition |
|---|---|---|
| *Escherichia coli* | DCS 495 | Caso-broth (Oxoid), pH 6.0 30°C |
| *Salmonella enteritidis* | DCS 1152 | |
| *Pseudomonas fluorescens* | DCS 428 | |
| *Aspergillus versicolor* | DCS 1069 | YM-broth (Merck), pH 6.0 25°C |
| *Aspergillus parasiticus* | DCS 709 | |
| *Aspergillus niger* | DCS 1115 | |
| *Saccharomyces cerevisiae* | DCS 599 | |
| *Rhodotorula glutinis* | DCS 606 | |
| *Debaryomyces hansenii* | DCS 605 | |
| *Pichia anomala* | DCS 603 | |
| *Candida tropicalis* | DCS 604 | |
| *Candida parapsilosis* | DCS 1090 | |

### Determination of Minimal inhibitory concentration

The Minimal Inhibition Concentration Assay (MIC) is a 96 well liquid based assay developed for an automated assessment system and performed essentially as described in (Method no AP-003). Indicator strains (*table* 2) are tested for inhibition of growth by the putative anti-microbial substances and combinations thereof, using a wide concentration range (depending on the compound), in this case by performing a ²/₃-dilution series of each sample at pH 6.0 (±0.2)). From a 10fold diluted overnight culture 5 µl of each strain was inoculated in one well corresponding to an approximate inoculation density of 10³-10⁴ cells/well. Media used were YM-broth for yeast and moulds and CASO-broth for bacterial isolates. Strains were incubated at 24°C or 30°C for 24 to 48 hours depending on the strain. The increase in optical density (O.D.) after incubation is compared to a growth control to estimate whether the substance has a bacteriostatic effect and to determine the MIC. MIC is defined as the lowest concentration of the antimicrobial that will inhibit measurable growth. A bacteriostatic effect is defined as the OD₆₂₀ being less than or equal to 20% of the growth control after incubation.

To obtain more accurate estimates of the values, an Excel macro was used to process the raw data. The macro scans the raw data and finds the two concentrations that lie on either side of the O.D. 20% threshold value. It then pinpoints the actual concentration where the O.D. crosses the threshold, using linear correlation. All data are presented as the mean values of duplicates for each microorganism.

The MIC assays were run on a fully automated assessment system consisting of a 9-hotel Cytohotel (Thermo), a Biomek FxP pipetting robot (Beckman Coulter), an ORCA robotic arm on a 3 meter rails (Beckman Coulter), 2 Synergy HT spectrophotometers (Biotek), a Cytomat 6001 incubator (Thermo) and a Cytomat 2C incubator (Thermo).

### RESULTS

### Determination of Minimum inhibitory concentrations

The growth of the test strains was investigated in the presence of the individual compounds, Mustard essential oil (MEO-S), Green tea extract (GTE) and OA-F, 2 component systems and the combination of all three.
Table 3 to 6 contain the Minimum Inhibitory Concentration (MIC) of the possible combinations of MEO-S (A), OA-F (B) and GTE (C) against 6 yeast and 3 mould but also against Gram-negative bacteria. For comparison purposes, tables also include the MIC (ppm) data for each component alone and its presence (calculated) at the concentration of the combination that caused total inhibition of the tested strain.
All minimal inhibitory concentration data obtained are presented as the mean values of duplicates for each microorganism. The lower the MIC value, the higher the bacteriostatic activity level.
Figure 1 to figure 3 below demonstrate the remarkable efficacy of the individual components in proposed formulations against Gram-negative organisms and yeast and mould, whereas figure 1 shows MEO-S, figure 2 shows GTE and figure 3 shows the effect for OA-F.

The minimum inhibitory concentrations of MEO-S (table 3) towards yeasts and moulds were between 38 and 380 ppm. These findings suggest that allyl isothiocyanate (AITC), the active component of MEO-S, might be a potential natural anti-fungal agent for food preservation. Activity against bacterial strains did not seem efficient for mustard essential oil. Gram negative bacteria are generally not or only moderately inhibited by the mustard essential oil products. If within the test range from 0.13 mg/mL to 5 mg/mL, the minimum inhibitory concentrations against Gram negatives are with 4.2 mg/mL generally high, especially considering the organoleptical impact of this type of compound.

The effect of OA-F on the growth of the indicator strains was investigated in the range of 0.78 mg/mL to 30 mg/mL. Only small differences in the final growth compared to the growth control were observed for most of the test strains. The growth of *Pseudomonas fluorescens* was inhibited to some extent at the higher concentrations (10.3 mg/mL) of the fermentate. *Rhodotorula glutinis* was the most sensitive yeast. For this strain an MIC, of 3.28 mg/mL was found.

The antimicrobial activity of Green tea extract is also shown in table 3. The average MIC of GTE against Gram negatives was 4.13 mg/mL, which is slightly lower than the mean inhibition concentration against yeast strains (4.9 mg/mL). However, the tested moulds were most susceptible to the GTE and were on average inhibited at 0.78 mg/mL.

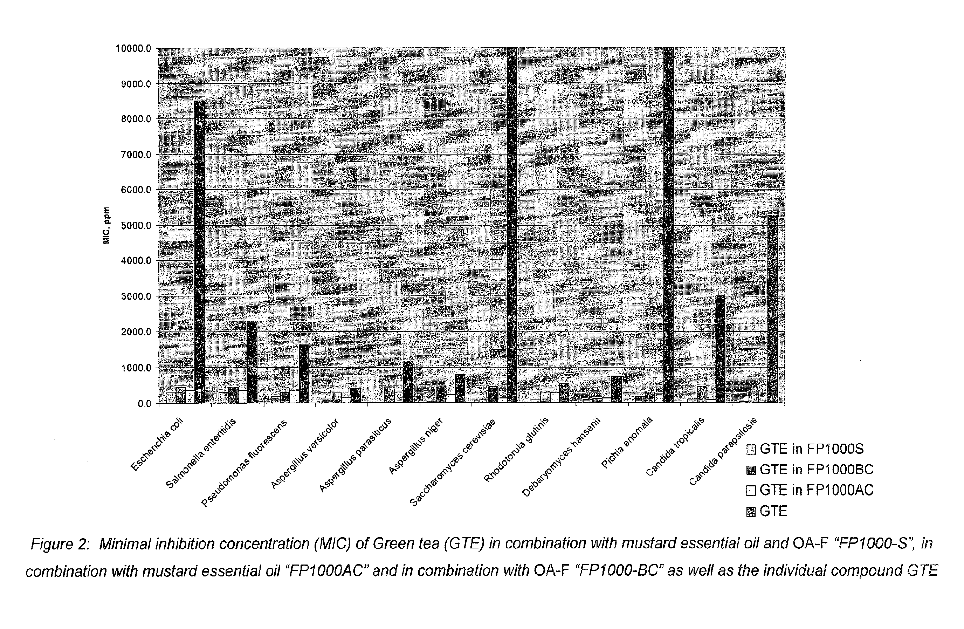

Given the metabolic complexity of microbial cells, whether prokaryote (bacteria) or eukaryote (yeast and fungi), it is very unlikely for a single substance to affect all actions. When combinations of the above mentioned substances are used in a formulation, a more efficient cell lysis resulted probably due to multiple modes of action. Hence, not only a broader spectrum of inhibition is seen but also concentrations needed to control individual microorganism are lower. The decreased inhibitory concentrations of the individual compounds in the combination are indicative for a synergistic action. The synergistic combination of MEO, GTE and OA-F increases the efficacy of the individual components up to 136 times. This can be seen in figure 2 (for reference see also table 3), e.g. for the test strain *Candida parapsilosis* where GTE alone is inhibiting the yeast only at 4 mg/mL in combination with the essential oil and the fermentate only 0.029 mg/mL of the plant extract are needed to control the yeast. Considering all investigated test strains, antimicrobial activity of GTE in the combination is generally 5 to 136 times higher versus the single compound.

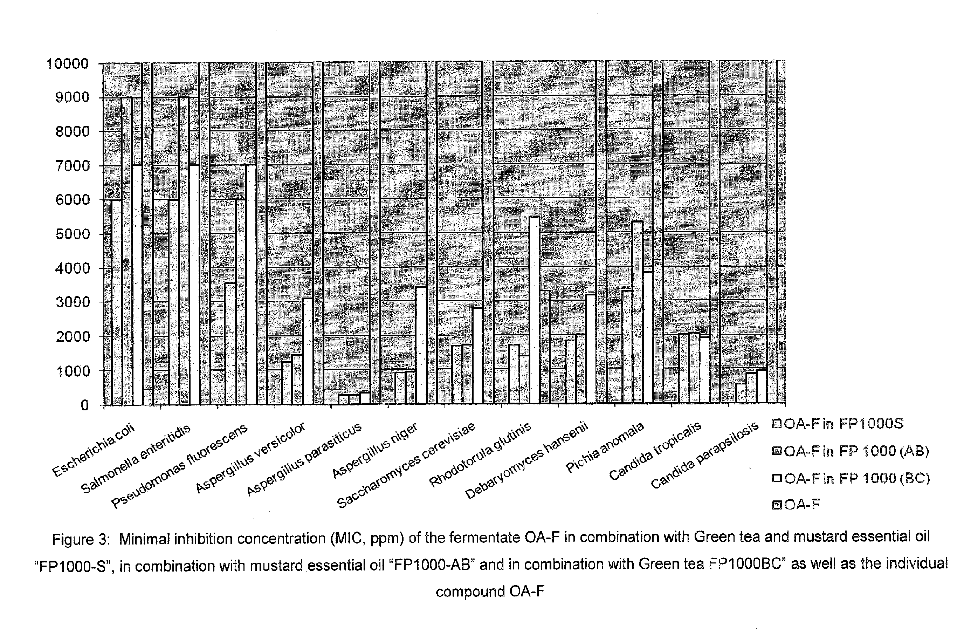

Up to 115 times higher efficacy than the individual component was shown for *Aspergillus parasiticus* considering OA-F, as can be seen in figure 3 (for reference see also table 3), where OA-F cannot sufficiently suppress the growth of the mould at a concentration on 30 mg/mL. In contrast, in combination with the essential oil and the plant extract only 0.26 mg/mL fermentate are needed to control the mould.

Just like for GTE and OA-F, the combination of the 3 compounds resulted also for MEO in a synergistic effect, with 3 to 25 times lower inhibition concentrations than for the individual compounds, as can be seen in figure 1 and table 3, respectively.

The MIC for the proposed synergistic combination "FP1000-S" ranged from 0.55 mg/mL to 5.4mg/mL against yeast and mould organism and from 5.8 mg/mL to >10 mg/mL against the Gram-negative bacteria (column "FP1000-S"), table 3).
Comparing the MIC values of the 3 component system with the possible 2 component combinations it can be seen that "FP1000-S" is 15% more effective than a combination of the MEO and OA-F (MIC values column "FP1000-AB"), table 4), 40% more efficient than the combination of MEO and GTE (MIC values column "FP1000-AC"), table 5), and even 70% more efficient than the combination of OA-F and GTE (MIC values column "FP1000-BC"), table 6). Furthermore, the inhibition spectrum, especially when considering the Gram-negative tested strains is broader in "FP1000-S" than in the 2 component combinations. For example, in a concentration range of "FP1000-S" of 5.4 to 10 mg/mL the optical density that was reached at the end of the experiment was slightly lower than the control values for *E. coli* and *Salmonella enteritidis.* However, the combinations "FP1000-AB" and "FP1000-BC" did not suppress the growth of these test strains. "FP-1000-AC" suppressed the growth of the Gram-negatives at higher concentrations but did not inhibit *Pseudomonas fluorescens.*

**Table 3: Minimal inhibition concentration (MIC; mean values of duplicates) of the 3 component blend FP1000S, the MICs of the individual compounds and the actual presence of the individual compounds in the blend at MIC level in ppm**

| | | FP 1000S | MEO-S | | OA-F | | GTE | |
|---|---|---|---|---|---|---|---|---|
| Test range [ppm] | | 260 - 10000 ppm | 130 - 5000 ppm | | 780 - 30000 ppm | | 260 - 7500 ppm | |
| Strain | No. | MIC, ppm [FP1000S] | MIC, ppm [MEO-S] | AITC concentration | MIC, ppm [OA-F] | OA-F concentration | MIC, ppm [GTE] | GTE concentration |
| *Escherichia coli* | DCS 495 | >10000 | >5000 | >700 | N-30000 | N-6000 | 6375 | >300 |
| *Salmonella enteritidis* | DCS 1152 | >10000 | >5000 | >700 | >30000 | >6000 | 1680 | >300 |
| *Pseudomonas* | DCS 428 | 5890 | 4230 | 412 | 10300 | 3534 | 1230 | 177 |
| *Aspergillus versicolor* | DCS 1069 | 2040 | 2030 | 143 | >30000 | 1224 | 306 | 61 |
| *Aspergillus parasiticus* | DCS 709 | 549 | 175 | 38 | N-30000 | 262 | 855 | 18 |
| *Aspergillus niger* | DCS 1115 | 1520 | 2630 | 106 | >30000 | 912 | 594 | 46 |
| *Saccharomyces cerevisiae* | DCS 599 | 2800 | 797 | 196 | N-30000 | 1680 | >7500 | 84 |
| *Rhodotorula glutinis* | DCS 606 | 2850 | 2930 | 200 | 3280 | 1710 | 399 | 86 |
| *Debaryomyces hansenii* | DCS 605 | 3040 | 2160 | 213 | N-30000 | 1824 | 565 | 91 |
| *Pichia anomala* | DCS 603 | 5430 | 1430 | 380 | N-30000 | 3258 | >7500 | 163 |
| *Candida tropicalis* | DCS 604 | 3360 | 752 | 235 | N-30000 | 2016 | 2258 | 101 |
| *Candida parapsilosis* | DCS 1090 | 954 | 278 | 67 | >30000 | 572 | 3968 | 29 |

**Table 4: Minimal inhibition concentration (MIC; mean values of duplicates) of a 2 component blend FP1000AB, the MICs of the individual compounds MEO and OA-F and the actual presence of the individual compounds in the blend at MIC level in ppm**

| | | FP 1000 AB | MEO-S | | OA-F | |
|---|---|---|---|---|---|---|
| Test range [ppm] | | 260 - 10000 ppm | 13-500 ppm | | 780 - 30000 ppm | |
| Strain | No. | MIC,ppm [FP1000AB] | MIC, ppm [MEO-S] | MEO-S concentration | MIC, ppm [OA-F] | OA-F concentration |
| *Escherichia coli* | DCS 495 | N-10000 | >5000 | >700 | N-30000 | N-10000 |
| *Salmonella enteritidis* | DCS 1152 | N-10000 | >5000 | >700 | >30000 | >10000 |
| *Pseudomonas fluorescens* | DCS 428 | 9980 | 4230 | 699 | 10300 | 5988 |
| *Aspergillus versicolor* | DCS 1069 | 2400 | 2030 | 168 | >30000 | 1440 |
| *Aspergillus parasiticus* | DCS 709 | 690 | 175 | 48 | N-30000 | 256 |
| *Aspergillus niger* | DCS 1115 | 1540 | 2630 | 108 | >30000 | 924 |
| *Saccharomyces cerevisiae* | DCS 599 | 2840 | 797 | 199 | N-30000 | 1704 |
| *Rhodotorula glutinis* | DCS 606 | 2310 | 2930 | 162 | 3280 | 1386 |
| *Debaryomyces hansenii* | DCS 605 | 3360 | 2160 | 235 | N-30000 | 2016 |
| *Pichia anomala* | DCS 603 | 8830 | 1430 | 618 | N-30000 | 5298 |
| *Candida tropicalis* | DCS 604 | 3380 | 752 | 237 | N-30000 | 2028 |
| *Candida parapsilosis* | DCS 1090 | 1430 | 278 | 100 | >30000 | 858 |

**Table 5: Minimal inhibition concentration (MIC; mean values of duplicates) of a 2 component blend FP1000AC, the MICs of the individual compounds MEO and GTE and the actual presence of the individual compounds in the blend at MIC level in ppm**

| | | FP 1000 AC | MEO-S | | GTE | |
|---|---|---|---|---|---|---|
| Test range [ppm] | | 260 - 10000 ppm | 13 - 500 ppm | | 260 - 7500 ppm | |
| Strain | No. | MIC,ppm [FP1000AC] | MIC, ppm [MEO-S] | MEO-S concentration | MIC, ppm [GTE] | GTE concentration |
| *Escherichia coli* | DCS 495 | >10000 | >5000 | >700 | 6375 | >300 |
| *Salmonella enteritidis* | DCS 1152 | >10000 | >5000 | >700 | 1680 | >300 |
| *Pseudomonas fluorescens* | DCS 428 | >10000 | 4230 | >700 | 1230 | >300 |
| *Aspergillus versicolor* | DCS 1069 | 5140 | 2030 | 360 | 306 | 154 |
| *Aspergillus parasiticus* | DCS 709 | 585 | 175 | 41 | 855 | 18 |
| *Aspergillus niger* | DCS 1115 | 7830 | 2630 | 548 | 594 | 235 |
| *Saccharomyces cerevisiae* | DCS 599 | 4630 | 797 | 324 | >7500 | 139 |
| *Rhodotorula glutinis* | DCS 606 | 9090 | 2930 | 636 | 399 | 273 |
| *Debaryomyces hansenii* | DCS 605 | 5240 | 2160 | 367 | 565 | 157 |
| *Pichia anomala* | DCS 603 | 6350 | 1430 | 445 | >7500 | 191 |
| *Candida tropicalis* | DCS 604 | 3190 | 752 | 223 | 2258 | 96 |
| *Candida parapsilosis* | DCS 1090 | 1600 | 278 | 112 | 3968 | 48 |

**Table 6: Minimal inhibition concentration (MIC; mean values of duplicates) of a 2 component blend FP1000BC, the MICs of the individual compounds OA-F and GTE and the actual presence of the individual compounds in the blend at MIC level in ppm**

| | | FP 1000 BC | OA-F | | GTE | |
|---|---|---|---|---|---|---|
| Test range [ppm] | | 260 - 10000 ppm | 780 - 30000 ppm | | 260 - 7500 ppm | |
| Strain | No. | MIC,ppm [FP1000BC] | MIC, ppm [OA-F] | OA-F concentratio n | MIC, ppm [GTE] | GTE concentration |
| *Escherichia coli* | DCS 495 | N-10000 | N-30000 | N-7000 | 6375 | N-450 |
| *Salmonella enteritidis* | DCS 1152 | N-10000 | >30000 | N-7000 | 1680 | N-450 |
| *Pseudomonas fluorescens* | DCS 428 | >10000 | 10300 | >7000 | 1230 | 300 |
| *Aspergillus versicolor* | DCS 1069 | 9650 | >30000 | 5790 | 306 | 290 |
| *Aspergillus parasiticus* | DCS 709 | N-10000 | N-30000 | N-7000 | 855 | N-450 |
| *Aspergillus niger* | DCS 1115 | N-10000 | >30000 | N-7000 | 594 | N-450 |
| *Saccharomyces cerevisiae* | DCS 599 | N-10000 | N-30000 | N-7000 | >7500 | N-450 |
| *Rhodotorula glutinis* | DCS 606 | >10000 | 3280 | >7000 | 399 | 300 |
| *Debaryomyces hansenii* | DCS 605 | 6740 | N-30000 | 4044 | 565 | 202 |
| *Pichia anomala* | DCS 603 | >10000 | N-30000 | >7000 | >7500 | 300 |
| *Candida tropicalis* | DCS 604 | N-10000 | N-30000 | N-7000 | 2258 | 450 |
| *Candida parapsilosis* | DCS 1090 | >10000 | >30000 | >7000 | 3968 | 300 |

| | | | | | | |
|---|---|---|---|---|---|---|
| N-xxxx: No inhibition at highest concentration | | | | | | |

### Conclusion

The present novel formulation either contains components that have been approved for use directly in food, are considered GRAS by the FDA or have been demonstrated to be safe for human contact and for the environment.

The formulation containing all 3 components Mustard essential oil, OA-F and Green tea extract was most effective in inhibiting Gram negative and yeast and moulds with an average minimal inhibitory activity of 0.86 mg/mL, 0.3 mg/mL and 0.12 mg/mL, respectively. In addition, the synergistic nature of the described combination allows low dosages of the individual components.

Mustard essential oil and OA-F in combination show 15% less efficacy than the 3 component system. Mustard essential oil and Green tea are even 40% less effective and OA-F and Green tea is on average 70% less potent.

Besides considerably lower minimum inhibition concentrations of the 3 component formulation also a broader inhibition spectrum was observed compared with 2 component blends.

### APPLICATION STUDY - BBQ SAUCE

The objective of the present study was to monitor the effect of two concentrations of the present antifungal (YM10) on spoilage yeast and moulds in a pasteurised BBQ sauce and thereby evaluate the potential of the product in comparison to MicroGARD^{®}200, a prior art competitor fermentate, and potassium sorbate.

The present antifungal consisting of allyl isothiocyanate from brown mustard, catechins from green tea and organic acids from a propioniibacteria fermentate, was added at concentrations of 1% and 0.5%, and the BBQ sauce (pH 3.8) was subjected to a pool of 4 yeast species and a pool of 4 mould species, respectively at the defined inoculation rate of 500 to 1000 CFU/ml.

Experimental results from the challenge study have shown that 0.5% (w/w) of the present antifungal (YM10) provided bacteriocidal effects against the test strains and competed with the bench marker potassium sorbate for at least 15 weeks of storage.

The competitor antimicrobial and MicroGARD^{®} 200, employed at 1.25% and 1% respectively, did not convincingly protect the tested BBQ sauce from yeast spoilage under the applied test conditions, since only a slight delay compared to the unpreserved control was observed.
Incubated at 20 °C, mould did not find a suitable substrate with the BBQ sauce. No visual mould growth was detected.

In conclusion, results from the present study demonstrate that the here investigated antifungal formulation, the present antifungal (YM10) had the potential to control the outgrowth of the inoculated yeast (500 - 1000 CFU/g) pool in BBQ sauce (pH <4.0) when stored at ambient temperature (20 °C).

### INTRODUCTION

The present antifungal (YM10) contains allyl isothiocyanate (AITC) from brown mustard (in form of WasaOURO D from Mitsubishi Food, Inc.), green tea catechins (water extracted green tea obtained from Taiyo Ltd.) and organic acids from a propioniibacteria fermentate (in form of MicroGARD^{®}200),

The blend and its individual components have proven antifungal and antibacterial activity when testing *in vitro* and *in situ.* To demonstrate the potential use of the present antifungal (YM10) in culinary products such as BBQ sauce, challenge studies were conducted, aiming at monitoring the effect of newly developed blends *in situ* at different dosages of the functional blend on spoilage yeast and moulds benchmarked against potassium sorbate, a competitor product, and a Danisco antimicrobial product MicroGARD^{®} 200 (table 7).

BBQ sauce was selected as a representative for culinary products with an expected shelf life of 90 days.

**Table 7: Investigated antimicrobials and their composition**

| BATCH ID | B/C | D | E | F |
|---|---|---|---|---|
| Antimicrobial | Novel antifungal (YM10) | MicroGARD^{™} 200 | Potassium sorbate | Competitor product |
| Active component (concentration , blend composition) | • Total organic acid (8 - 11%) | • Acetic acids (7 - 8 %) | • Potassium sorbate | • Acetic acids (6 %) |
| | • Green tea catechins (1.0%) | • Propionic acid (2 - 4%) | | • Propionic acid (16%) |
| | | | | • Lactic acid (28%) |
| | • allyl isothiocyanate (AITC) (0.35%) | | | |

### EXPERIMENTAL

Samples of the BBQ sauce (formula in table 9) with and without the experimental blend were produced in the Danisco Culinary Application Laboratory, Brabrand. The variables were designed with the intent of demonstrating the feasibility in terms of antifungal effectiveness of the conceptual antifungal at the proposed levels benchmarked against potassium sorbate; competitor product and MicroGARD^{®} 200 at commonly used levels.

Each batch was split (scheme table 8) in probes of 90 gram and placed in sterile jars. 42 probes of each batch were inoculated with the desired level of yeast and 5 probes of each batch were inoculated with mould spores, respectively at a targeted inoculation rate of 500 to 1000 CFU/g.

The viscous products were thoroughly mixed (2 minutes) within 10 minutes of inoculation to ensure that the inoculum was evenly distributed throughout the product. One sample remained un-inoculated and was used as negative control to monitor the native contamination flora. All samples were incubated at ambient temperature (20 °C) and assayed for yeast, plated on an appropriate yeast medium, until confirmed failure (≥1.0E+06 CFU/g) or until visible mould growth, respectively. In parallel, the growth of lactic acid bacteria and total cell count were monitored on MRS and PCA in all the batches and the non-inoculated blind, respectively.

**Table 8: Sample overview**

| | A | | | B | | C | | D | | E | | F | |
|---|---|---|---|---|---|---|---|---|---|---|---|---|---|
| Antimicrobial | No antimicrobials | | | Novel antifungal (YM10) | | Novel antifungal (YM10) | | MicroGard 200 | | Potassium sorbate | | Competitor product | |
| Amount | | | | 1% | | 0.5% | | 1% | | 0.1% | | 1.25% | |
| Strains | | Mould | yeast | Mould | yeast | Mould | yeast | Mould | yeast | Mould | yeast | Mould | yeast |
| CFU/ml | 0 | 1000* | 1000* | 1000* | 1000* | 1000* | 1000* | 1000* | 1000* | 1000* | 1000* | 1000* | 1000* |
| Measurement | 1 | 2 | 1 | 2 | 1 | 2 | 1 | 2 | 1 | 2 | 1 | 2 | 1 |
| Number of samples/ sampling day | 3 | 5 | 3 | 5 | 3 | 5 | 3 | 5 | 3 | 5 | 3 | 5 | 3 |
| Total Number of samples | 42 | 5 | 42 | 5 | 42 | 5 | 42 | 5 | 42 | 5 | 42 | 5 | 42 |

| | | | | | | | | | | | | | |
|---|---|---|---|---|---|---|---|---|---|---|---|---|---|
| * 500-1000 CFU/g Key to measurement: 1 - Total plate count/ Yeast count/ Lactic count, pH measurement 2 - Visual (mould growth) | | | | | | | | | | | | | |

### Laboratory Formulation: BBQ sauce

The BBQ sauce investigated in this study was produced according a standard recipe using the following variables:

**Table 9: BBQ sauce formulation.**

| **Ingredients [%]** | **Batch A Unprotected control** | **Batch B YM10 (1%)** | **Batch C YM10 (0.5%)** | **Batch D MG200 (1%)** | **Batch E Potassium Sorbate (0.1%)** | **Batch F Competitor product (1.25%)** |
|---|---|---|---|---|---|---|
| Tap Water | 27.85 | 26.85 | 27.35 | 26.85 | 27.75 | 26.6 |
| GRINDSTED® CFF 1105 | 0.5 | 0.5 | 0.5 | 0.5 | 0.5 | 0.5 |
| Tomato Paste | 27.5 | 27.5 | 27.5 | 27.5 | 27.5 | 27.5 |
| Vinegar (5%) | 20 | 20 | 20 | 20 | 20 | 20 |
| Brown Sugar | 16.5 | 16.5 | 16.5 | 16.5 | 16.5 | 16.5 |
| Soy Sauce | 5 | 5 | 5 | 5 | 5 | 5 |
| Liquid smoke | 1 | 1 | 1 | 1 | 1 | 1 |
| Salt | 0.5 | 0.5 | 0.5 | 0.5 | 0.5 | 0.5 |
| Chilli Powder | 0.55 | 0.55 | 0.55 | 0.55 | 0.55 | 0.55 |
| Mustard Powder | 0.2 | 0.2 | 0.2 | 0.2 | 0.2 | 0.2 |
| Onion Powder | 0.15 | 0.15 | 0.15 | 0.15 | 0.15 | 0.15 |
| Garlic powder | 0.15 | 0.15 | 0.15 | 0.15 | 0.15 | 0.15 |
| Cayenne Pepper | 0.1 | 0.1 | 0.1 | 0.1 | 0.1 | 0.1 |
| Antimicrobial | 0 | 1 | 0.5 | 1 | 0.1 | 1.25 |
| **Calculated total** | 100 | 100 | 100 | 100 | 100 | 100 |

| | | | | | | |
|---|---|---|---|---|---|---|
| GRINDSTED® *CFF 1105 is a texturant*/*stabiliser available from Danisco A*/*S composed of modified starch, sodium alginate and locust bean gum.* | | | | | | |

### Procedure

Blend dry ingredients and the antimicrobials*
Add the dry mix slowly to the water under sheer 5-8 min and hydrate for a couple of minutes
Add the rest of the ingredients (tomato based)
Heat to 90°C while mixing at 300 RPMS, hold 5-7 min
Finish cooling to 25°C, then fill
*dissolve antimicrobials in water 50 ml and adjust pH to 4 with citric acid

### Preparation of bacterial cultures

The yeast and mould strains that were investigated in this challenge study are shown in table 10. In total 8 strains, from available from Danisco's Culture Collection (DCS) (Danisco A/S, Brabrand, Denmark) were employed as one yeast and one mould pool in the respective BBQ sauce. Originally, they were isolated e.g. from spoiled ketchup, mayonnaise, Salsa dressing or obtained from official culture collections such as DMSZ.

**Table 10: Investigate strains that were used as 1 yeast and 1 mould pool in this study.**

| Organism | Code | Isolated from |
|---|---|---|
| *Candida tropicalis* | DCS 604 | DSMZ 1346 |
| *Zygosaccharomyces bailii* | DCS 1167 | spoiled ketchup |
| *Zygosaccharomyces bailii* | DCS 1172 | spoiled ketchup |
| *Pichia spp* | DCS 1175 | Mayonnaise |
| *Penicillium* sp | DCS 1380 | Salsa dressing |
| *Aspergillus versicolor* | DCS 1069 | DSMZ 63292 |
| *Aspergillus parasiticus* | DCS 709 | |
| *Mucor* sp | DCS 1140 | Pet food |

Before each experiment, a stock culture of each yeast, maintained at -86°C in suitable broth containing glycerol 50% (v/v), was propagated through two consecutive growth cycles in suitable media (YGC-agar (VWR) pH 5.1 + 0.2; YM Broth (Becton, Dickinson and company) at pH 6.0 ± 0.2 at and temperature (25 °C). The overnight cultures are diluted in saline solution to obtain working cultures. A cocktail of the yeasts was generated by adding equal cell counts of each culture into a sterile container and mixed appropriately. The yeast cocktail was diluted and inoculated into the product in order to achieve the final desired concentration. Pool counts were verified via plate count.

Mould spores were prepared as follows: approx. 2 ml of sterile demineralised water was used to wash the spores off an out-grown mould cultivar (minimum 5 day old plate). This suspension is transferred to a sterile container. Pool counts were verified via plate count.

### Sample analysis

The BBQ sauces were assayed at time zero, day 2, day 5, day 12, weekly until week 10 (day 68) and bi-weekly thereafter until week 19 (day 131). CFU/g was detected for 3 samples from each batch inoculated with yeast. Before each sampling (closed jar), the sample was thoroughly mixed. 10 gram sample were aseptically pulled from each jar and diluted with peptone water. Each sample was stomached (1 min, normal setting) plated in duplicate onto YGC agar (VWR) and MRS (VWR), and incubated at 25 °C for 5 days and 37 °C for 3 days, respectively.

5 samples from each batch inoculated with mould were visually analysed for mould growth.

A pH measurement of non-inoculated sample material took place at every sampling date using a Mettler Toledo SevenEasy pH meter.

### RESULTS AND DISCUSSION

### Sample analysis

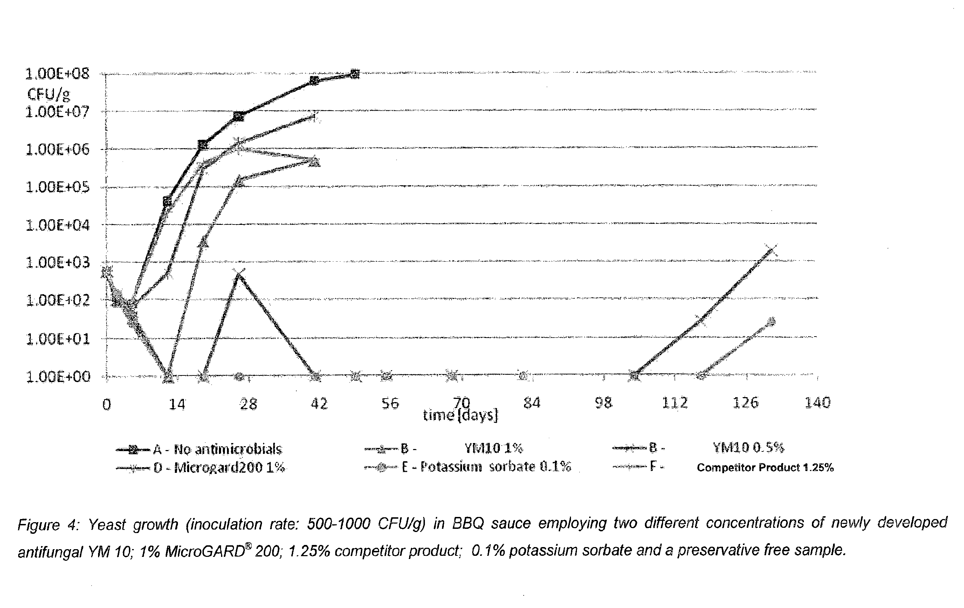

Figure 4 and the correlating data in table 11 show the influence of the different antimicrobials compared to an unpreserved control on the growth of the yeast pool inoculated at around 500 CFU/ml. As can be seen in the figure, the inoculated yeast started outgrowing after 12 days of incubation at ambient temperature (20 °C) in the control (red graph in figure 4). Thus, reaching stationary growth with cell counts on YGC agar of 9.2E+07 CFU/g after 49 days. The batch F, 1.25% competitor product, followed the growth curve of the control and only slightly lower cell counts compared to the unprotected batch were seen after day 19. Stationary growth was reached after 4 weeks (day 26) with cell counts of 5.4E+05 CFU/g. MicroGARD 200, batch C, could maintain the cell count to inoculation level up to 12 days. However, at the next sampling time the same high yeast counts as in the unprotected control and the batch with the competitor product were determined.

On the other hand, a bacteriocidal effect was seen in the BBQ samples with 1% and 0.5% of the antifungal the present antifungal (YM10) (green and purple graph in figure 4) and potassium sorbate (orange graph in figure 4) by reducing the initial load to below detection limit (3 log kill). The antifungal dosed at 0.5% could compete with potassium sorbate at least until day 104. Outgrowth of the added yeast was observed starting at sampling day 117. At the last sampling day (day 131), viable counts were also determined in the potassium sorbate samples. Nevertheless, a shelf life of 90 days was targeted which could be achieved when 0.5% the present antifungal (YM10) were employed. Interestingly, a dosage rate of 1% the present antifungal (YM10) could, despite the observed 3 Log reduction in the beginning, not control the yeast outgrowth. Already at day 19, 3.6E+03 CFU/ml were determined. The cell counts increased up to 5.0E+05 CFU/ml with 6 weeks.

**Table 11: Cell counts on YGC-agar to determine the yeast growth after inoculation with 300 - 800 CFU/g over test period in the different BBQ sauce batches.**

| day | **Batch A** | **Batch B** | **Batch C** | **Batch D** | **Batch E** | **Batch E** |
|---|---|---|---|---|---|---|
| | Unprotected control | YM10 (1%) | YM10 (0.5%) | MG200 (1%) | Potassium Sorbate (0.1%) | Competitor product (1.25%) |
| 0 | 5.77E+02 | 5.92E+02 | 5.67E+02 | 5.78E+02 | 6.07E+02 | 6.05E+02 |
| 2 | 1.20E+02 | 1.03E+02 | 1.05E+02 | 1.37E+02 | 1.47E+02 | 1.22E+02 |
| 5 | 8.20E+01 | 5.00E+01 | 3.50E+01 | 6.30E+01 | 2.50E+01 | 8.70E+01 |
| 12 | 4.29E+04 | 1.00E+00 | 1.00E+00 | 5.15E+02 | 1.00E+00 | 2.15E+04 |
| 19 | 1.26E+06 | 3.58E+03 | 1.00E+00 | 2.87E+05 | 1.00E+00 | 4.40E+05 |
| 26 | 7.18E+06 | 1.45E+05 | 4.78E+02 | 1.43E+06 | 1.00E+00 | 1.02E+06 |
| 41 | 6.23E+07 | 5.03E+05 | 1.00E+00 | 7.22E+06 | 1.00E+00 | 5.37E+05 |
| 49 | 9.15E+07 | - | 1.00E+00 | - | 1.00E+00 | - |
| 55 | - | - | 1.00E+00 | - | 1.00E+00 | - |
| 68 | - | - | 1.00E+00 | - | 1.00E+00 | - |
| 82 | - | - | 1.00E+00 | - | 1.00E+00 | - |
| 104 | - | - | 1.00E+00 | - | 1.00E+00 | - |
| 117 | - | - | 2.70E+01 | - | 1.00E+00 | - |
| 131 | - | - | 1.95E+03 | - | 2.50E+01 | - |

| | | | | | | |
|---|---|---|---|---|---|---|
| "-" not further assayed | | | | | | |

Besides the yeast growth, mould growth was also monitored. Therefore, 5 tubes per sample variant were tested. The inoculated mould spores did not show visible growth at ambient temperature even in the unprotected samples.

Furthermore, spoilage due to lactic acid bacteria was of concern as well. However, in none of the batches cultivatable cells were found over the test period of 131 days.

As mentioned above, better protection was found in the batch with a lower dosage of the present anti-fungal (YM10), which was somewhat unexpected. In order to explain this growth behaviour and to exclude a possible mix of the two batches containing the newly developed antifungal, we investigated the organic acid content of the 2 different BBQ sauce batches by analytical methods (GC/MS; A2729). Table 12 contains the results of the determination of the organic acid content.

Propionic acid was an important marker for this trial. Considering the propionic acid concentration added with the antimicrobials in batch B (1% YM 10) and C (0.5% YM 10) the expected concentration would be around 300 and 150 ppm. The concentrations found fit well with what was expected in terms of the ranking. Consequently we exclude the possibility that the two batched were mixed.

**Table 12: Organic acid content (ppm) of two selected BBQ batches**

| | **Batch B** | **Batch C** | **LOD** | **LOQ** |
|---|---|---|---|---|
| | YM10 1% | YM10 0.5% | | |
| Acetic acid | 13000 | 12000 | 20 | 60 |
| Propionic acid | 300 | 130 | 10 | 30 |
| Lactic acid | 650 | 520 | 30 | 90 |

pH is a very important parameter and hurdle for bacterial growth, for example an increased pH, could result in a different antimicrobial flora since the pH-level as a hurdle is decreased. In order to avoid pH difference in the different batches the pH was adjusted with citric acid. Following the formulation for BBQ sauce the expected pH was supposed to be around pH 3.8.

It was noticed that the pH in all batches, with exception of the uncontrolled sample, remained stable over the test period. This also supports the fact that no viable lactic acids were found (as mentioned before). A slight increase in pH was measured in the control batch.

**Table 13: pH development of the different BBQ sauce batches over the test period**

| day | **Batch A** | **Batch B** | **Batch C** | **Batch D** | **Batch E** | **Batch E** |
|---|---|---|---|---|---|---|
| | Unprotected control | YM10(1%) | YM10(0.5%) | MG200 (1%) | Potassium Sorbate (0.1%) | Competitor product (1.25%) |
| 0 | 3.75 | 3.75 | 3.77 | 3.77 | 3.74 | 3.70 |
| 2 | 3.81 | 3.79 | 3.81 | 3.80 | 3.80 | 3.77 |
| 5 | 3.78 | 3.81 | 3.79 | 3.80 | 3.78 | 3.76 |
| 12 | 3.74 | 3.74 | 3.74 | 3.73 | 3.72 | 3.70 |
| 19 | 3.76 | 3.76 | 3.77 | 3.77 | 3.74 | 3.75 |
| 26 | 3.85 | 3.81 | 3.81 | 3.85 | 3.80 | 3.82 |
| 41 | n.t. | n.t. | 3.79 | n.t. | 3.80 | n.t. |
| 49 | 3.91 | 3.80 | 3.78 | 3.85 | 3.77 | 3.81 |
| 55 | 4.08 | 3.82 | 3.79 | 3.86 | 3.76 | 3.86 |
| 68 | 3.96 | 3.74 | 3.72 | 3.77 | 3.71 | 3.81 |
| 82 | 4.16 | 3.86 | 3.78 | 3.97 | 3.78 | 3.86 |
| 104 | 4.14 | 3.82 | 3.77 | 3.84 | 3.75 | 3.85 |
| 117 | 4.10 | 3.88 | 3.78 | 4.16 | 3.76 | 3.84 |
| 131 | 4.10 | 3.76 | 3.79 | 3.84 | 3.79 | 3.81 |

### Conclusion

In conclusion, results from the present study demonstrate that the here investigated antifungal formulation, the present antifungal (YM10) may control the outgrowth of the inoculated yeast (500 - 1000 CFU/g) pool in the BBQ sauce (pH <4.0) when stored at ambient temperature (20 °C).
A dosage of 1% and 0.5% of the antifungal the present antifungal (YM10) but also potassium sorbate caused an initial 3 log reduction of the inoculated cell load. The antifungal dosed at 0.5% could compete with potassium sorbate at least until day 104 (week 15). Outgrowth of the added yeast was observed starting at sampling day 117 (week 17). At the last sampling day (day 131), viable counts were also determined in the potassium sorbate samples.

The competitor product and MicroGARD^{®} 200, employed at 1.25% and 1% respectively, did not convincingly protect the tested BBQ sauce from yeast spoilage under the applied test conditions, providing only a slight delay compared to the unpreserved control was observed.

The investigated mould did not find a suitable substrate with the chosen food model. No visual mould growth could be detected. Furthermore, the outgrowth of lactic acid bacteria was monitored over the test period as these spoilage organisms were of concern. However, no cultivatable cells were found in all the batches over the test period of 131 days. This may correlate well with the fact that no significant change in the pH was recorded.

With this challenge study we identified that the proposed combination (YM 10) demonstrated an immediate and efficient anti-fungal effect upon addition, and it controlled the outgrowth of the targeted yeast in the investigated product (BBQ sauce) over storage for at least 17 weeks at ambient temperature. Thus, it supports the promotion of the present antifungal (YM10) as a new antifungal product.

### APPLICATION STUDY - (FRESH) SALSA

The objective of the present study was to monitor the effect of two variations of the novel antifungal blend FP 1000 on spoilage yeast and moulds in a non-pasteurised Salsa sauce model and thereby evaluate the potential of the product in comparison to MicroGARD^{®}200 and potassium sorbate.

FP 1000-D1 and FP 1000-D2, consisting of allyl isothiocyanate from brown mustard, catechins from green tea and organic acids from a propioniibacteria fermentate in different ratios, were added at concentrations of 1%, and the Salsa *fresh* (pH 4.2) was subjected to a pool of 4 yeast species and a pool of 4 mould species, respectively at each two defined inoculation rate of 500 CFU/ml.

Experimental results from the challenge study have shown that 1% (w/w) of FP 1000-D1 and FP 1000-D2 provided bacteriocidal effects against the test strains and even slightly outperformed the bench marker potassium sorbate. The commercial antimicrobial MicroGARD^{®} 200, employed at 1%, did not convincingly protect the tested Salsa sauce from yeast spoilage under the applied test conditions, since the highest yeast cell counts were found in this batch.

The number of viable yeast cells in the non-treated samples (control batch) increased to 1.2E+05 CFU/g during the 92 day challenge trial, although the outgrowth started unexpected late (day 42). The highest acetic acid concentration out of all batches was found in the control, as determined at the end of the study by GC/MS.

Incubated at 4 °C, mould did not find a suitable substrate with the Salsa sauce. No visual mould growth was detected.

From an antimicrobial perspective it was, based on our results, not possible to discriminate either one of the formulations, since both versions performed equally well. Antifungal product FP 1000-D1, may be preferred as it has lower concentration of the active components ally isothiocyanate and green tea catechins, consequently the sensory impact is believed to be lower.

### INTRODUCTION

FP 1000, containing allyl isothiocyanate (AITC) from brown mustard (in form of WasaOURO D from Mitsubishi Food, Inc.), green tea catechins (water extracted green tea obtained from Taiyo Ltd) and organic acids from a propioniibacteria fermentate (in form of MicroGARD^{®}200), is a novel blend.

The blend and its individual components have proven antifungal and antibacterial activity when testing in vitro and in situ. To demonstrate the potential use of FP 1000 in culinary products such as Salsa sauce, challenge studies were conducted, aiming at monitoring the effect of newly developed blends in situ at different dosages of the active components (FP 1000-D1 and FP 1000-D2) on spoilage yeast and moulds benchmarked against potassium sorbate and MicroGARD^{®} 200 (table 14).

Non-pasteurised Salsa sauce, herein referred to as "Salsa sauce *fresh*" was selected as a representative for culinary products with an expected shelf life of 30 days. The expected relatively short shelf life was due to the missing heating step in the process.

**Table 14: Investigated antimicrobials and their composition**

| BATCH ID | B | C | D | E |
|---|---|---|---|---|
| Antimicrobial | FP1000-D1 | FP1000-D2 | MicroGARD™ 200 | Potassium sorbate |
| Active component (concentration, blend composition) | MicroGARD™ 200 (93.65%) | MicroGARD™ 200 (91%) | Acetic acids (7 - 8 %) | Potassium sorbate |
| | Green tea catechins (1.0%) | Green tea catechins (1.5%) | Propionic acid (2 - 4 %) | |
| | AITC (0.25%) | AITC (0.35%) | | |

| | | | | |
|---|---|---|---|---|
| MicroGARD^{™} 200 comprises acetic acid (7 - 8 %) and propionic acid (2 - 4 %) | | | | |

### EXPERIMENTAL

Samples of the Salsa sauce (formula in table 17) with and without the experimental blend were produced. The variables were designed with the intent of demonstrating the feasibility in terms of antifungal effectiveness of the conceptual antifungal at the proposed levels benchmarked against potassium sorbate and MicroGARD^{®} 200 at commonly used levels. It needs to be mentioned that the Salsa sauce was not pasteurized.

Each batch was split (scheme table 15) in probes of 90 gram and placed in sterile jars. 21 probes of each batch were inoculated with the desired level of yeast and 5 probes of each batch were inoculated with mould spores, respectively at a targeted inoculation rate of 300 to 800 CFU/g.

The viscous products were thoroughly mixed (2 minutes) within 10 minutes of inoculation to ensure that the inoculum was evenly distributed throughout the product. One sample remained un-inoculated and was used as negative control to monitor the native contamination flora. All samples were incubated in the dark at chilled temperature (4 °C) and assayed for yeast, plated on an appropriate yeast medium, until confirmed failure (≥1.0E+06 CFU/g) or until visible mould growth, respectively. In parallel, the growth of lactic acid bacteria and total cell count were monitored on MRS and PCA in all the batches and the non-inoculated blind, respectively.

**Table 15: Sample overview**

| Batch | A | | | B/C/D/E | |
|---|---|---|---|---|---|
| | No antimicrobials | | | Antimicrobial | |
| Strains | | Mould | yeast | Mould | yeast |
| CFU/ml | 0 | 1000 | 1000 | 1000 | 1000 |
| Measurement | 1 | 3 | 2 | 3 | 2 |
| Number of samples/sampling day | 3 | 5 | 3 | 5 | 3 |
| Total Number of samples | 21 | 5 | 21 | 5 | 21 |

| | | | | | |
|---|---|---|---|---|---|
| Key to measurement: 1 - Total plate count, pH measurement 2- Yeast count/ Lactic count, pH measurement 3 - Visual (mould growth) | | | | | |

### Preparation of bacterial cultures

The yeast and mould strains that were investigated in this challenge study are shown in table 16. In total 8 strains, available from Danisco's Culture Collection (DCS) (Danisco A/S, Brabrand, Denmark) were employed as 1 yeast and 1 mould pool in the respective Salsa sauce. Originally, they were isolated e.g. from spoiled ketchup, mayonnaise, Salsa dressing or obtained from official culture collections such as DMSZ.

**Table 16: Investigate strains that were used as 1 yeast and 1mould pool in this study.**

| Organism | Code | Isolated from |
|---|---|---|
| *Candida tropicalis* | DCS 604 | DSMZ 1346 |
| *Zygosaccharomyces bailii* | DCS 1167 | spoiled ketchup |
| *Zygosaccharomyces bailii* | DCS 1172 | spoiled ketchup |
| *Pichia spp* | DCS 1175 | Mayonnaise |
| *Penicillium* sp | DCS 1380 | Salsa dressing |
| *Aspergillus versicolor* | DCS 1069 | DSMZ 63292 |
| *Aspergillus parasiticus* | DCS 709 | |
| *Mucor* sp | DCS 1140 | Pet food |

Before each experiment, a stock culture of each yeast, maintained at -86°C in suitable broth containing glycerol 50% (v/v), was propagated through two consecutive growth cycles in suitable media (YGC-agar (VWR) pH 5.1 + 0.2; YM Broth (Becton, Dickinson and Company) at pH 6.0 ± 0.2 at and temperature (25 °C). The overnight cultures are diluted in saline solution to obtain working cultures. A cocktail of the yeasts was generated by adding equal cell counts of each culture into a sterile container and mixed appropriately. The yeast cocktail was diluted and inoculated into the product in order to achieve the final desired concentration. Pool counts were verified via plate count.

Mould spores were prepared as follows: approx. 2 ml of sterile demineralised water was used to wash the spores off an out-grown mould cultivar (minimum 5 day old plate). This suspension is transferred to a sterile container. Pool counts were verified via plate count.

### Laboratory Formulation: Salsa sauce

The Salsa sauce investigated in this study was produced according a standard recipe using the following variables:

**Table 17: Salsa sauce formulation.**

| **Ingredients [%]** | **Batch A Unprotected control** | **Batch B FP1000-D1 (1%)** | **Batch C FP1000-D2 (1%)** | **Batch D MG200 (1%)** | **Batch E Potassium Sorbate (0.1%)** |
|---|---|---|---|---|---|
| Tap Water | 29.35 | 28.35 | 28.35 | 28.35 | 29.25 |
| Salt (Sodium Chloride) | 1.50 | 1.50 | 1.50 | 1.50 | 1.50 |
| Juice from diced tomato | 10.00 | 10.00 | 10.00 | 10.00 | 10.00 |
| Tomato paste | 22.00 | 22.00 | 22.00 | 22.00 | 22.00 |
| Diced Tomatoes | 14.00 | 14.00 | 14.00 | 14.00 | 14.00 |
| Diced green pepper | 5.00 | 5.00 | 5.00 | 5.00 | 5.00 |
| Diced onion | 12.50 | 12.50 | 12.50 | 12.50 | 12.50 |
| Cilantro, IQF | 0.15 | 0.15 | 0.15 | 0.15 | 0.15 |
| Sugar | 1.00 | 1.00 | 1.00 | 1.00 | 1.00 |
| Jalapenos | 4.00 | 4.00 | 4.00 | 4.00 | 4.00 |
| Bestmix | 0.25 | 0.25 | 0.25 | 0.25 | 0.25 |
| Garlic powder | 0.25 | 0.25 | 0.25 | 0.25 | 0.25 |
| Potassium sorbate | | | | | 0.10 |
| MicroGARD^{®}200 | | | | 1.00 | |
| FP 1000 | | 1.00 | 1.00 | | |
| **Calculated total** | 100 | 100 | 100 | 100 | 100 |

### Procedure

Blend dry ingredients and the antimicrobials
Add the try mix slowly to the water and hydrate for a couple of minute
Add the rest of the ingredients (tomato based)
Homogenize during processing

### Sample analysis

The Salsa sauces were assayed at time zero, day 3, day 7, day 14 and were plated bi-weekly thereafter until day 92. CFU/g was detected for 3 samples from each batch inoculated with yeast. Before each sampling (closed jar), the sample was thoroughly mixed. 10 gram sample were aseptically pulled from each jar and diluted with peptone water. Each sample was stomached (1 min, normal setting) plated in duplicate onto YGC agar (VWR) and MRS (VWR), and incubated at 25 °C for 5 days and 37 °C for 3 days, respectively.

5 samples from each batch inoculated with mould were visually analysed for mould growth.

For the untreated un-inoculated sample total cell count was made by plating onto PC-agar and MRS-agar (VWR).

A pH measurement of non-inoculated sample material took place at every sampling date using a Mettler Toledo SevenEasy pH meter.

### RESULTS AND DISCUSSION

### Sample analysis

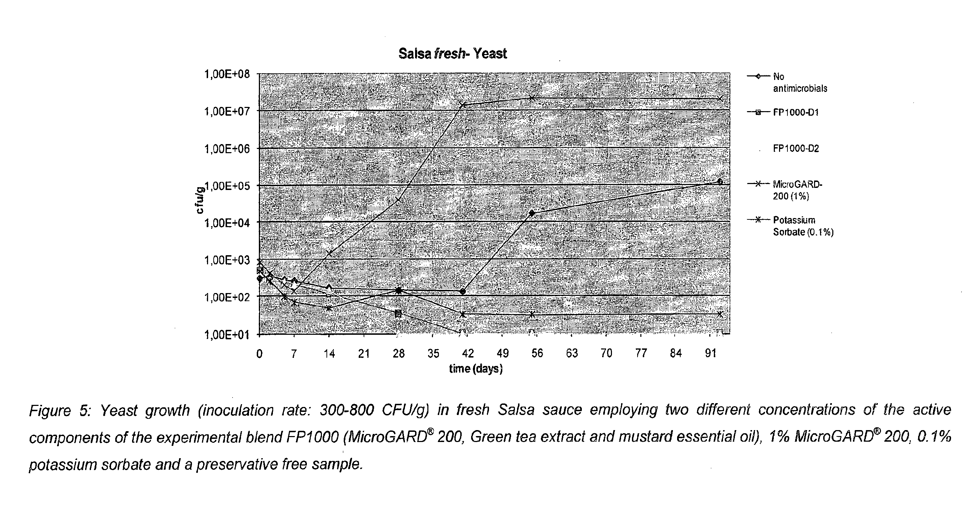

Figure 5 and the correlating data in table 18 show the influence of the different antimicrobials on the growth of the yeast pool inoculated at around 500 CFU/ml compared to an unpreserved control. As can be seen in the figure, the inoculated yeast first grew after 42 days of incubation at chilled temperature (4 °C) in the control (blue graph in figure 5). The late outgrowth of the targeted indicator strains in the unpreserved Salsa samples was unexpected, especially when compared to the batch containing 1% (w/w) MicroGARD^{®} 200, where yeasts started outgrowing already after one week (reaching stationary counts after 42 days). Even at the end of the study, after 92 days, the yeast count in the unpreserved batch was about 2 log lower compared to the addition of 1% MircoGARD^{®} 200, which reached yeast cell counts on YGC agar up to 2.0E+07 CFU/g.

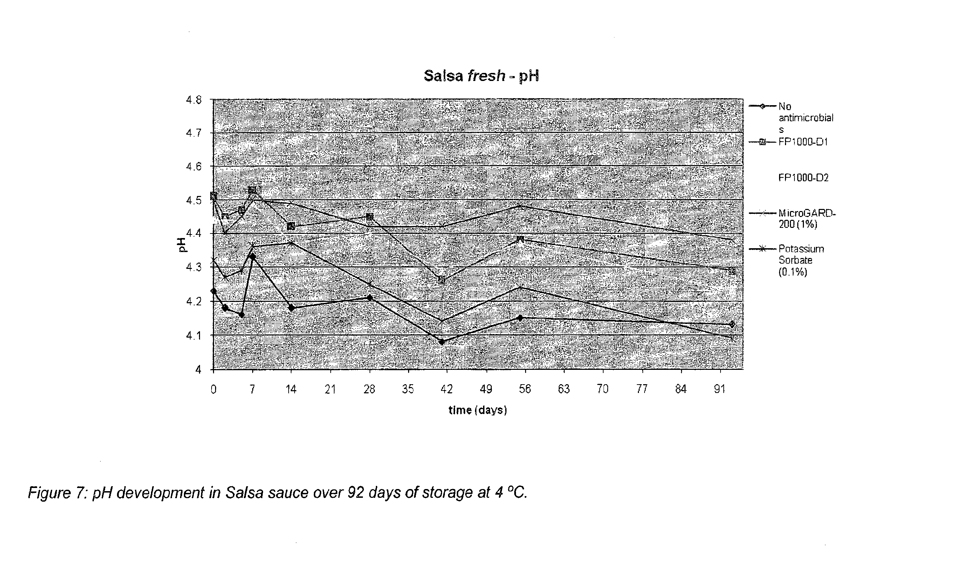

On the other hand, 1% of the experimental blends FP 1000-D1 and FP 1000-D2 (pink and yellow graph in figure 5) performed the best even compared to potassium sorbate (purple graph in figure 7) as they showed bacteriocidal effects. However, a discrimination of the two blends based on the results was not possible since the differences in the cell counts were not significant.

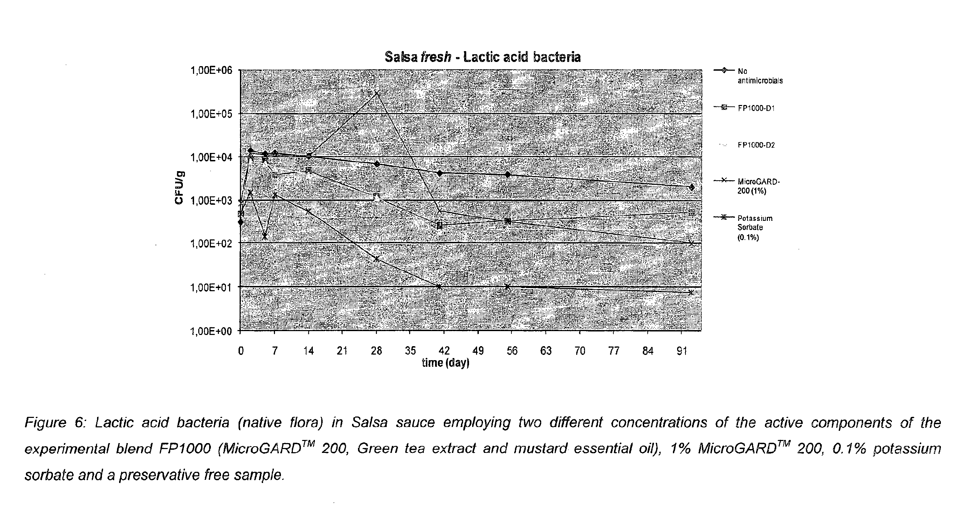

Due to the missing pasteurisation step during the production of the Salsa sauce, lactic acid bacteria were of concern. Figure 6 and the correlating data in table 19, however, demonstrate that, although natively present, lactic acid bacteria did not reach high cell counts. With exception of the batch containing potassium sorbate (purple graph in figure 6) the microbial counts on MRS-agar increased about 1 Log after 3 days of incubation, as can be seen in the figure. However, with longer incubation the cell counts decreased in all samples. The counts in the batches containing FP 1000-D1 and FP 1000-D2 (pink and yellow graph in figure 6) decreased herby faster compared to the in the control (blue graph in figure 6). Potassium sorbate seemed to better control the outgrowth of the lactic acid bacteria compared to any other treatment. No more colonies were detected on MRS-agar after 42 days. The slope of the bacterial growth, however, was comparable to the FP 1000 samples.

**Table 18: Cell counts on YGC-agar to determine the yeast growth after inoculation with 300 - 800 CFU/g over test period in the different Salsa sauce batches.**

| day | **Batch A** | **Batch B** | **Batch C** | **Batch D** | **Batch E** |
|---|---|---|---|---|---|
| | Unprotected control | FP1000-D1 (1%) | FP1000-D2 (1%) | MG200 (1%) | Potassium Sorbate (0.1 %) |
| 0 | 3.05E+02 | 4.80E+02 | 4.75E+02 | 8.25E+02 | 4.75E+02 |
| 2 | 3.40E+02 | 2.70E+02 | 2.80E+02 | 4.10E+02 | 2.50E+02 |
| 5 | 2.80E+02 | 2.40E+02 | 2.50E+02 | 2.00E+02 | 1.00E+02 |
| 7 | 2.60E+02 | 2.18E+02 | 2.12E+02 | 1.37E+02 | 6.80E+01 |
| 14 | 1.71E+02 | 1.18E+02 | 1.48E+02 | 1.37E+03 | 4.80E+01 |
| 28 | 1.45E+02 | 3.50E+01 | <1.00E+01 | 4.00E+04 | 1.45E+02 |
| 41 | 1.35E+02 | <1.00E+01 | <1.00E+01 | 1.40E+07 | 3.30E+01 |
| 55 | 1.72E+04 | <1.00E+01 | <1.00E+01 | 2.15E+07 | 3.20E+01 |
| 93 | 1.18E+05 | <1.00E+01 | <1.00E+01 | 2.03E+07 | 3.30E+01 |

**Table 19: Cell counts over test period on MRS-agar to determine the native flora of Lactic acid bacteria in the different Salsa sauce batches.**

| day | **Batch A** | **Batch B** | **Batch C** | **Batch D** | **Batch E** |
|---|---|---|---|---|---|
| | Unprotected control | FP1000-D1 (1%) | FP1000-D2 (1%) | MG200 (1%) | Potassium Sorbate (0.1%) |
| 0 | 3.05E+02 | 4.80E+02 | 4.75E+02 | 8.25E+02 | 4.75E+02 |
| 2 | 1.40E+04 | 8.00E+03 | 7.90E+03 | 1.20E+04 | 1.50E+03 |
| 5 | 1.19E+04 | 7.70E+03 | 7.00E+03 | 1.09E+04 | 1.40E+02 |
| 7 | 1.23E+04 | 3.82E+03 | 5.53E+03 | 1.13E+04 | 1.30E+03 |
| 14 | 1.03E+04 | 4.75E+03 | 3.80E+03 | 1.08E+04 | 5.38E+02 |
| 28 | 6.85E+03 | 1.17E+03 | 1.13E+03 | 2.88E+05 | 4.30E+01 |
| 41 | 4.17E+03 | 2.50E+02 | 1.80E+02 | 5.55E+02 | <1.00E+01 |
| 55 | 3.88E+03 | 3.20E+02 | 2.13E+02 | 3.17E+02 | <1.00E+01 |
| 93 | N/A* | 5.25E+02 | 2.12E+02 | 1.00E+02 | <1.00E+01 |

| | | | | | |
|---|---|---|---|---|---|
| * MRS plates were overgrown with yeast, colony count not possible | | | | | |

Besides the yeast growth also mould growth was monitored. Therefore, 5 tubes per sample variant were tested. The inoculated mould spores did not show visible growth at 4 °C even in the unprotected samples. However, by the end of the shelf life, moulds were found (plate count) in the yeast inoculated samples without any preservative system. 1% of the 3 component experimental blends, on the other hand, could control the mould outgrowth for 12 weeks. This was also seen for the application of MicroGARD^{®} 200 and potassium sorbate.

In order to explain the late outgrowth of the target organism in the control batch, we investigated the organic acid content of the 5 different Salsa sauce batches by analytical methods (GC/MS; A2729). Table 20 contains the results of the determination of the organic acid content.

Propionic acid was an important marker for this trial. Considering the propionic acid concentration added with the antimicrobials in batch B, C and D the expected concentration would be 0.036%, 0.035% and 0.039%. The concentrations found, although slightly lower than what was added, fit well with what was expected in terms of the ranking. More precisely, 0.03%, 0.028% and 0.032% propionic acid were found in the batches B, C and D.

The default concentration of acetic acid in the Salsa sauce (following to the formulation in table 15) could be around 0.13% (w/w) as it was found in the sample containing potassium sorbate (batch E) (no additional acetic acid added; no spoilage).

The unpreserved control had, somewhat surprisingly, the highest concentration of acetic acid. The acetic acid content was with 0.52% approximately three times higher than batch E and twice as high as in the batches B, C and D where, with the employed antimicrobials, 0.064 to 0.08% more acetic acid were added compared to the batches A and E. These high levels of acetic acid are rather unlikely to be due to bacterial fermentation, given environmental conditions, low pH, chilled temperature, substrate availability. However, bacteria could have contributed to some degree since lactic acid bacteria also produce acetic acid together with the lactic acid. Acetic acid forming Gram negative *Acetobacter* spp, could be a contaminant from the herbs and spices used, and could have been metabolising glucose to acetic acid.

The low pH (4.2) in the Salsa sauce and the chilled storage conditions could be the reason for the late outgrowth in the control. Once starting to grow the target yeast *Pichia spp.* and *Zygosaccharomyces bali* could be the cause for the high acetic acid concentrations found. Another scenario could be that if the acetic acid was in the sample at the beginning of the trial, both the higher acetic acid and the lactic acid concentration could explain the late outgrowth in this sample (batch A).

**Table 20: Organic acid content (w/w%) of the Salsa sauce batches**

| | **Batch A** | **Batch B** | **Batch C** | **Batch D** | **Batch E** | | |
|---|---|---|---|---|---|---|---|
| | Unprotected | FP1000-D1 | FP1000-D2 | MG200 | Potassium Sorbate | | |
| | control | (1%) | (1%) | (1%) | (0.1%) | **LOD** | **LOQ** |
| Acetic acid | 0.52 | 0.20 | 0.22 | 0.25 | 0.13 | 0.0015 | 0.004 |
| Propionic acid | ND | 0.03 | 0.028 | 0.032 | ND | 0.0010 | 0.003 |
| Lactic acid | 0.31 | 0.045 | 0.037 | 0.036 | <0.018 | 0.006 | 0.018 |

Furthermore, it is worth mentioning that the dominating colonies from the batch containing MicroGARD^{®} 200 were isolated and identified by VITEK and 18S sequencing. This was done to show if a wild yeast grew in the samples or if it was one of the targeted organisms.

Interestingly, the yeast isolated in the MicroGARD^{®} 200 batch was identified as *Saccharomyces servazzii,* which has not been added with the pool. The dominating yeast in the control batch was traced back to *Pichia spp.,* likely to be the added DCS 1175 strain. At what time point the contaminant yeast occurred is not known. The contaminant yeast, *Saccharomyces servazzii,* was tested *in vitro* for susceptibility towards MicroGARD^{®} 200, allyl isothiocyanate, and the FP1000 variant FP 1000-D1 by determination of minimal inhibition concentrations (data not shown). The results confirmed a tolerance of the yeast against MicroGARD^{®} 200 at 1% (w/v) and susceptibility towards allyl isothiocyanate 0.01% and FP 1000-D1 at 1% (w/v), respectively. Consequently, although eventually present in all batches, *Saccharomyces servazzii* could have been suppressed in the preserved batches, but was able to outgrow in batch D. The high acetic acid concentration in the unpreserved batch A and the competing yeast flora could have caused suppression of the contaminant in those samples.

Summarising these findings, the high cell yeast counts in batch D and the early outgrowth are associated to a MicroGAR^{®}200 tolerant contaminant and should therefore not be directly compared to the control batch A.

Following the formulation for Salsa sauce the expected pH was supposed to be pH 4.1. However, it was noted that the pH of the control was with pH 4.23 slightly higher, as can be seen in figure 7. It was demonstrated that with the application of the experimental blends and fermentate MicroGARD^{®} 200 the pH was increased to pH 4.44 (4.51) and 4.50 (table 21), respectively. This observation has been made earlier and is explained by the production of the fermentate and by the composition of the conceptual blend. Somewhat surprising was the pH influence of the addition of 0.1% potassium sorbate, which also resulted in a pH increase to pH 4.32.

pH is a very important parameter and hurdle for bacterial growth, for example an increased pH, could result in a different antimicrobial flora since the pH-level as a hurdle is decreased. However, in order to not implement further acids, that would influence the antimicrobial activity as well, it was decided to not adjust the pHs in the batches but rather monitor the microbiological effect by determination of the total cell count and enumeration of lactic acid bacteria on suitable growth media. It was noticed that the pHs in all batches followed the same trend and decreased slightly over the test period.

**Table 21: pH development of the different Salsa sauce batches over the test period**

| **day** | **Batch A** Unprotected control | **Batch B** FP1000-D1 (1%) | **Batch C** FP1000-D2 (1%) | **Batch D** MG200 (1%) | **Batch E** Potassium Sorbate (0.1%) |
|---|---|---|---|---|---|
| **0** | 4.23 | 4.51 | 4.44 | 4.50 | 4.32 |
| **2** | 4.18 | 4.45 | 4.44 | 4.40 | 4.27 |
| **5** | 4.16 | 4.47 | 4.44 | 4.45 | 4.29 |
| **7** | 4.33 | 4.53 | 4.49 | 4.5 | 4.36 |
| **14** | 4.18 | 4.42 | 4.37 | 4.49 | 4.37 |
| **28** | 4.21 | 4.45 | 4.4 | 4.42 | 4.25 |
| **41** | 4.08 | 4.26 | 4.29 | 4.42 | 4.14 |
| **55** | 4.15 | 4.38 | 4.37 | 4.48 | 4.24 |
| **93** | 4.13 | 4.29 | 4.23 | 4.38 | 4.09 |

### Conclusion

In conclusion, results from the present study demonstrate that the here investigated FP1000 formulations (FP1000-D1 and FP1000-D2) had the potential to control the outgrowth of the inoculated yeast (300 - 800 CFU/g) and mould (300 - 800 CFU/g) pool in non-pasteurised Salsa sauce (pH <4.2) when stored at 4 °C.
The number of viable yeast cells in the non-treated samples increased to 1.2E+05 CFU/g during the 92 day challenge trial, although the outgrowth started unexpected late (day 42). This batch contained the highest acetic acid concentration out of all batches.
It was evident that 1% of FP 1000-D1 and FP 1000-D2 showed bacteriocidal effects against the test strains and even slightly outperformed the benchmarked potassium sorbate.
The commercial antimicrobial MicroGAR^{®} 200, employed at 1%, did not convincingly protect the tested Salsa sauce from yeast spoilage under the applied test conditions, since the highest yeast cell counts were found in this batch. However, the isolated strain was identified as *Saccharomyces servazzii,* which was not part of the inoculated yeast pool and which showed tolerance towards the fermentate when tested *in vitro.*

The investigated mould did not find a suitable substrate with the chosen food model. No visual mould growth could be detected.

Furthermore, the outgrowth of lactic acid bacteria was monitored over the test period as these spoilage organisms were of concern. And although an initial 1 Log increase was observed the cell counts remained stable over the test period and were below 1.3E+04 CFU.

It is noticed that the pH in all batches followed the same trend and decreased slightly over the test period. Acidification through spoilage bacteria could explain this effect partly, although a correlation with the cell count was not found for all the samples.

From an antimicrobial perspective it was, based on our results, not possible to discriminate either one of the formulations, since both versions performed equally well.

### APPLICATION STUDY - RANCH DRESSING

The objective of the present study was to monitor the effect of a newly developed antifungal composition "FP 1000" on spoilage yeast and moulds in a regular Ranch dressing and thereby evaluating two compositions of the potential product in comparison to MicroGAR®200, and potassium sorbate. "FP 1000-D1" and "FP1000-D2", both consisting of allyl isothiocyanate from brown mustard, catechins from green tea and organic acids from a propioniibacteria fermentate but at 2 different ratios, were added at concentrations of 1% (w/w), and the regular Ranch dressing (pH 4) was subjected to a pool of 4 yeast species and a pool of 4 mould species, respectively at the defined inoculation rate of 500 to 1000 CFU/g.

Experimental results from the challenge study have shown that the antifungal formulations, "FP1000 D1" and "FP1000 D2" applied at 1%, had the potential to control the outgrowth of the inoculated yeast pool in the regular Ranch dressing when stored at ambient temperature (20 °C). The provided bacteriocial effects (initial 2 log reduction) against the test strains competed with the benchmarker potassium sorbate for at least 29 weeks (198 days) of storage.
Incubated at 20 °C, mould did not find a suitable substrate with the Ranch dressing. No visual mould growth was detected.

### INTRODUCTION

"FP 1000", containing allyl isothiocyanate (AITC) from brown mustard (in form of WasaOURO D from Mitsubishi Food, Inc.), green tea catechins (water extracted green tea obtained from Taiyo Ltd.) and organic acids from a propioniibacteria fermentate (in form of MicroGARD®200).

The blend and its individual components have proven antifungal and antibacterial activity when testing in vitro and in situ - see above. However, to evaluate the potential use of "FP1000" in culinary products such as regular Ranch dressing, challenge studies were conducted, aiming at monitoring the effect of newly developed blends in situ at different dosages levels of the blend components on spoilage yeast and moulds benchmarked against potassium sorbate, and a Danisco antimicrobial product MicroGARD® 200 (table 22).

Regular Ranch dressing was selected as a representative for Culinary products with an expected shelf life of 90 to 120 days at ambient temperature.

**Table 22: Investigated antimicrobials and their composition**

| BATCH ID | B | C | D | E |
|---|---|---|---|---|
| Antimicrobial | "FP 1000-D1" | "FP 1000-D2" | MicroGARD™ 200 | Potassium sorbate |
| Active component (concentration blend composition) | Total organic acid (8.5 - 11.5%) | Total organic acid (8-11%) | Acetic acids (7-8%) | Potassium sorbate |
| | | Green tea catechins (1.5%) | Propionic acid (2-4%) | |
| | Green tea catechins (1.0%) | | | |
| | | allyl isothiocyanate (AITC) (0.35%) | | |
| | allyl isothiocyanate (AITC) (0.25%) | | | |

### EXPERIMENTAL

Samples of the regular ranch dressing (formula in table 24) with and without the experimental blend were produced in the Danisco Culinary Application Laboratory, Brabrand. The variables were designed with the intent of demonstrating the feasibility in terms of antifungal effectiveness of the conceptual antifungal at the proposed levels benchmarked against potassium sorbate and MicroGARD® 200 at commonly used levels.

Each batch was split (scheme table 23) in probes of 90 gram and placed in sterile jars. 36 probes of each batch were inoculated with the desired level of yeast and 5 probes of each batch were inoculated with mould spores, respectively at a targeted inoculation rate of 500 to 1000 CFU/g.

The viscous products were thoroughly mixed (2 minutes) within 10 minutes of inoculation to ensure that the inoculum was evenly distributed throughout the product. One sample remained un-inoculated and was used as negative control to monitor the native contamination flora. All samples were incubated at ambient temperature (20 °C) and assayed for yeast, plated on an appropriate yeast medium, until confirmed failure (≥1.0E+05 CFU/g) or until visible mould growth, respectively. In parallel, the growth of lactic acid bacteria and total cell count were monitored on MRS and PCA in all the batches and the non-inoculated blind, respectively.

**Table 23: Sample overview**

| | A | | | B | | C | | D | | E | |
|---|---|---|---|---|---|---|---|---|---|---|---|
| Antimicrobi al | No antimicrobials | | | FP 1000-D1 | | FP 1000-D2 | | MicroGard 200 | | Potassium sorbate | |

| Amount | | | | 1% | | 1% | | 1% | | 0.1% | |
|---|---|---|---|---|---|---|---|---|---|---|---|
| Strains | | Mould | yeast | Mould | yeast | Mould | yeast | Mould | yeast | Mould | yeast |
| CFU/g | 0 | 1000* | 1000* | 1000* | 1000* | 1000* | 1000* | 1000* | 1000* | 1000* | 1000* |
| Measurem ent | 1 | 2 | 1 | 2 | 1 | 2 | 1 | 2 | 1 | 2 | 1 |
| Number of samples/ sampling day | 3 | 5 | 3 | 5 | 3 | 5 | 3 | 5 | 3 | 5 | 3 |
| Total Number of samples | 36 | 5 | 36 | 5 | 36 | 5 | 36 | 5 | 36 | 5 | 36 |

| | | | | | | | | | | | |
|---|---|---|---|---|---|---|---|---|---|---|---|
| * 500-1000 CFU/g Key to measurement: 1 - Total plate count/ Yeast count/ Lactic count, pH measurement 2 - Visual (mould growth) | | | | | | | | | | | |

### Laboratory Formulation: Ranch dressing

The Ranch dressing investigated in this study was produced according a standard recipe using the following variables:

**Table 24: Formulation Ranch dressing.**

| Ingredients [%] | Batch A Un-protected control | Batch B FP1000-D1 (1%) | Batch C FP1000-D2 (1%) | Batch D MG200 (1%) | Batch E Potassium Sorbate (0.1%) |
|---|---|---|---|---|---|
| Tap Water | 22.216 | 21.216 | 21.216 | 21.216 | 22.116 |
| Soy bean oil | 58.0 | 58.0 | 58.0 | 58.0 | 58.0 |
| Salted egg yolk | 2.1 | 2.1 | 2.1 | 2.1 | 2.1 |
| Granulated | 4.0 | 4.0 | 4.0 | 4.0 | 4.0 |
| Sugar | | | | | |
| Salt | 2.4 | 2.4 | 2.4 | 2.4 | 2.4 |
| Lactic acid (88%) | 0.38 | 0.38 | 0.38 | 0.38 | 0.38 |
| Garlic powder | 0.2 | 0.2 | 0.2 | 0.2 | 0.2 |
| Onion powder | 0.4 | 0.4 | 0.4 | 0.4 | 0.4 |
| Dehydrated green onions | 0.12 | 0.12 | 0.12 | 0.12 | 0.12 |
| Lemon Juice concentrate | 0.12 | 0.12 | 0.12 | 0.12 | 0.12 |
| Parsley Flakes | 0.02 | 0.02 | 0.02 | 0.02 | 0.02 |
| White Pepper | 0.014 | 0.014 | 0.014 | 0.014 | 0.014 |
| Xanthan Gum | 0.02 | 0.02 | 0.02 | 0.02 | 0.02 |
| Buttermilk powder | 4.0 | 4.0 | 4.0 | 4.0 | 4.0 |
| Dehydrated Dill weed | 0.01 | 0.01 | 0.01 | 0.01 | 0.01 |
| White Vinegar | 6.0 | 6.0 | 6.0 | 6.0 | 6.0 |
| Antimicrobial | 0 | 1 | 1 | 1 | 0.1 |
| Calculated total | 100 | 100 | 100 | 100 | 100 |

### Procedure

Dry blend the sugar and the xanthan gum
Add it to the water phase and let the hydrocolloids hydrate for some minutes
Add the egg yolk
Add the butter milk powder
Add all the rest of the dried ingredients (salt, spices, herbs, antimicrobials (batch B to E) Emulsify the oil under high shear
Add the acidic ingredient (vinegar and lemon juice)

### Reparation of bacterial cultures

The yeast and mould strains that were investigated in this challenge study are shown in table 4. In total 8 strains, from Danisco's in-house Culture Collection (DCS) (Danisco A/S, Brabrand, Denmark) were employed as 1 yeast and 1 mould pool in the respective Ranch dressing. Originally, they were isolated e.g. from spoiled ketchup, mayonnaise, Salsa dressing or obtained from official culture collections such as DMSZ.

**Table 25: Investigate strains that were used as 1 yeast and 1 mould pool in this study.**

| Organism | Code | Isolated from |
|---|---|---|
| *Candida tropicalis* | DCS 604 | DSMZ 1346 |
| *Zygosaccharomyces bailii* | DCS 1167 | spoiled ketchup |
| *Zygosaccharomyces bailii* | DCS 1172 | spoiled ketchup |
| *Pichia spp* | DCS 1175 | Mayonnaise |
| *Penicillium sp* | DCS 1380 | Salsa dressing |
| *Aspergillus versicolor* | DCS 1069 | DSMZ 63292 |
| *Aspergillus parasiticus* | DCS 709 | |
| *Mucor* sp | DCS 1140 | Pet food |

Before each experiment, a stock culture of each yeast, maintained at -86°C in suitable broth containing glycerol 50% (v/v), was propagated through two consecutive growth cycles in suitable media (YGC-agar (VWR) pH 5.1 + 0.2; YM Broth (Becton, Dickinson and company) at pH 6.0 ± 0.2 at and temperature (25 °C). The overnight cultures are diluted in saline solution to obtain working cultures. A cocktail of the yeasts was generated by adding equal cell counts of each culture into a sterile container and mixed appropriately. The yeast cocktail was diluted and inoculated into the product in order to achieve the final desired concentration. Pool counts were verified via plate count.
Mould spores were prepared as follows: approx. 2 ml of sterile demineralised water was used to wash the spores off an out-grown mould cultivar (minimum 5 day old plate). This suspension is transferred to a sterile container. Pool counts were verified via plate count.

### Sample analysis

The Ranch dressing was assayed at time zero, day 3, day 7, day 14, bi-weekly thereafter until week 13 (day 90) and every 4 to 6 weeks until week 29. CFU/g was detected for 3 samples from each batch inoculated with yeast. Before each sampling (closed jar), the sample was thoroughly mixed. 10 gram sample were aseptically pulled from each jar and diluted with peptone water. Each sample was stomached (1 min, normal setting) plated in duplicate onto YGC agar (VWR), PC agar and MRS agar (VWR), and incubated at 25 °C for 5 and 7 days and 37 °C for 3 days, respectively.

5 samples from each batch inoculated with mould were visually analysed for mould growth.

A pH measurement of non-inoculated sample material took place at every sampling date using a Mettler Toledo Seven Easy pH meter.

### RESULTS AND DISCUSSION

### Sample analysis

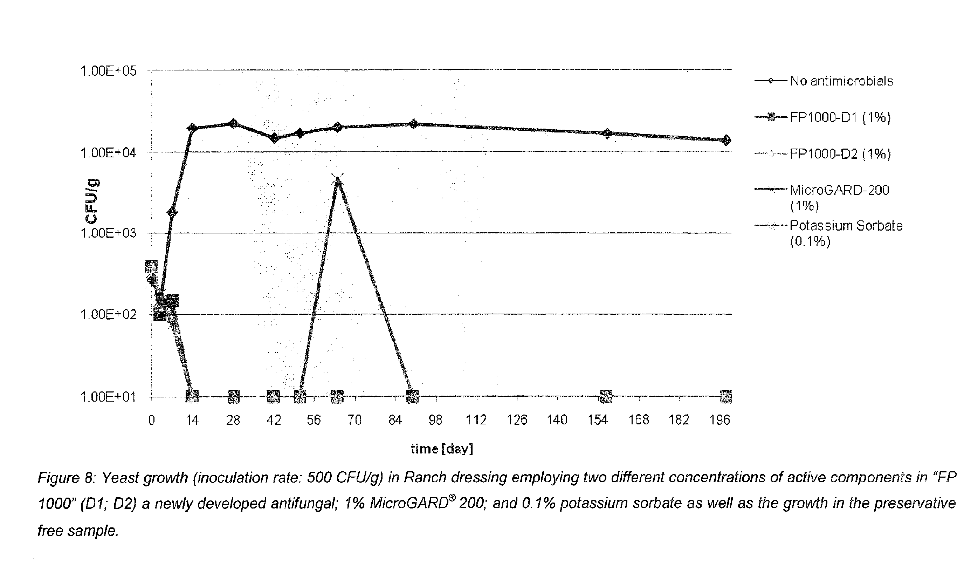

Figure 8 and the correlating data in table 26 show the influence of the different antimicrobials compared to an unpreserved control on the growth of the yeast pool inoculated at around 500 CFU/ml. As can be seen in the figure, the inoculated yeast started outgrowing after 7 days of incubation at ambient temperature (20 °C) in the preservative free control (red graph in figure 8). Thus, reaching stationary growth with cell counts on YGC agar of 1.93E+04 CFU/g after 14 days. This was about 1Log below the defined level of spoilage. MicroGARD 200, batch D, could maintain the cell count to inoculation level up to day 64, where an outlining high cell count of 4.7E+03 CFU/g was detected. However, the cell count on YGC agar for batch D was again below detection limit (1.0E+01 CFU/g) the following sampling days.

A bacteriocidal effect was seen in the Ranch dressing samples with 1% of the two antifungal compositions of "FP 1000" (dark and light green graphs in figure 8) as well the samples containing 0.1% potassium sorbate (blue graph figure 8) by reducing the initial load to below detection limit (2 log kill). The pool of yeasts was not able to recover from the initial kill over 198 days of investigation in any of the preserved batches.

**Table 26: Cell counts on YGC-agar to determined the yeast growth after inoculation with 500 CFU/g over test period in the different Ranch dressing batches.**

| day | Batch A | Batch B | Batch C | Batch D | Batch E |
|---|---|---|---|---|---|
| | Unprotected control | FP1000-D1 (1%) | FP1000-D2 (1%) | MG200 (1%) | Potassium Sorbate (0.1%) |
| 0 | 2.60E+02 | 3.90E+02 | 3.90E+02 | 2.50E+02 | 3.20E+02 |
| 3 | 1.50E+02 | 1.00E+02 | 1.30E+02 | 1.50E+02 | 1.70E+02 |
| 7 | 1.80E+03 | 1.45E+02 | 9.50E+01 | 1.20E+02 | 7.50E+01 |
| 14 | 1.93E+04 | 1.00E+01 | 1.00E+01 | 1.00E+01 | 1.00E+01 |
| 28 | 2.25E+04 | 1.00E+01 | 1.00E+01 | 1.00E+01 | 1.00E+01 |
| 42 | 1.47E+04 | 1.00E+01 | 1.00E+01 | 1.00E+01 | 1.00E+01 |
| 56 | 1.71E+04 | 1.00E+01 | 1.00E+01 | 1.00E+01 | 1.00E+01 |
| 64 | 1.98E+04 | 1.00E+01 | 1.00E+01 | 4.68E+03 | 1.00E+01 |
| 90 | 2.20E+04 | 1.00E+01 | 1.00E+01 | 1.00E+01 | 1.00E+01 |
| 157 | 1.67E+04 | 1.00E+01 | 1.00E+01 | 1.00E+01 | 1.00E+01 |
| 198 | 1.37E+04 | 1.00E+01 | 1.00E+01 | 1.00E+01 | 1.00E+01 |

Besides the yeast growth also mould growth was monitored. Therefore, 5 containers per sample variant were tested. In table 6, visible growth per test tube was documented. The inoculated mould spores did not show visible growth at ambient temperature even in the unprotected samples.

**Table 27: Mould growth in Ranch dressing, visibly defermined and documented as "+". (e.g. "+++--" 3 out of 5 jars showed growth).**

| day | Batch A | Batch B | Batch C | Batch D | Batch E |
|---|---|---|---|---|---|
| | Unprotected control | FP1000-D1(1%) | FP1000-D1 (0.5%) | MG200 (1%) | Potassium Sorbate (0.1%) |
| 0 | ----- | ----- | ----- | ----- | ----- |
| 3 | ----- | ----- | ----- | ----- | ----- |
| 7 | ----- | ----- | ----- | ----- | ----- |
| 14 | ----- | ----- | ----- | ----- | ----- |
| 28 | ----- | ----- | ----- | ----- | ----- |
| 42 | ----- | ----- | ----- | ----- | ----- |
| 56 | ----- | ----- | ----- | ----- | ----- |
| 64 | ----- | ----- | ----- | ----- | ----- |
| 90 | ----- | ----- | ----- | ----- | ----- |
| 157 | ----- | ----- | ----- | ----- | ----- |
| 198 | ----- | ----- | ----- | ----- | ----- |

pH is a very important parameter and hurdle for bacterial growth, for example an increased pH, could result in a different antimicrobial flora since the pH-level as a hurdle is decreased.

However, it was decided to not adjust the pHs to not change the formulation, but rather monitor the effect by determination of total cell count and enumeration of lactic acid bacteria on suitable growth media. The lowest pH (3.84) was seen for the control batch, whereas all samples containing the fermentate had pH greater than 4.1. Even the pH of the potassium sorbate batch was with pH 4.02 higher than the control batch. The pH development over time can be seen in table 28. It is noticed that the pHs in all batches follow the same trend and decrease about 0.1 pH unit over storage time. A correlation with the cell count (data for enumeration of total cell count not shown) was not found. (Cell counts on selective media for lactic acid were below detection limit over the entire test period.) Hence, acidification through spoilage bacteria does not seem to explain the effect. Moreover, the different start pHs of the samples did not seem to have direct influence on the challenge study.

**Table 28: pH development of the different Ranch dressing batches over the test period**

| day | Batch A | Batch B | Batch C | Batch D | Batch E |
|---|---|---|---|---|---|
| | Unprotected control | FP1000-D1 (1%) | FP1000-D2 (1%) | MG200 (1%) | Potassium Sorbate (0.1 %) |
| 0 | 3.84 | 4.12 | 4.13 | 4.14 | 4.02 |
| 3 | Nd | 4.11 | 4.13 | 4.14 | 4.00 |
| 7 | 3.84 | 4.13 | 4.14 | 4.14 | 4.02 |
| 14 | 3.84 | 4.11 | 4.12 | 4.12 | 4.00 |
| 21 | Nd | Nd | Nd | Nd | Nd |
| 28 | 3.80 | 4.05 | 4.08 | 4.09 | 3.94 |
| 42 | 3.79 | 4.06 | 4.09 | 4.08 | 3.96 |
| 56 | 3.82 | 4.07 | 4.07 | 4.07 | 3.96 |
| 64 | 3.80 | 4.05 | 4.08 | 4.08 | 3.95 |
| 90 | 3.73 | 4.06 | 4.04 | 4.08 | 3.96 |
| 157 | Nd | 4.03 | 4.03 | 4.04 | 3.92 |
| 198 | Nd | 4.02 | 4.05 | 4.05 | 3.94 |

### Conclusion

In conclusion, results from the present study demonstrate that the here investigated antifungal formulations, "FP1000 D1" and "FP1000 D2" had the potential to control the outgrowth of the inoculated yeast (500 - 1000 CFU/g) pool in the regular Ranch dressing (pH 4.0) when stored at ambient temperature (20 °C).

A dosage of 1% of the antifungal compositions, differing in the composition of the actives organic acids, allyl isothiocyanate, and catechins caused an initial 2 log reduction of the inoculated cell load. This applies also for 1% of MicroGARD 200 and 0.1% of potassium sorbate.

The pool of yeasts was not able to recover from the initial kill over 198 days of investigation in any of the preserved batches.

The investigated mould did not find a suitable substrate with the chosen food model. No visual mould growth could be detected.

Furthermore, the outgrowth of lactic acid bacteria was monitored over the test period as these spoilage organisms were of concern. However, no cultivatable cells were found in all the batches over the test period of 198 days. This may correlate well with the fact that no significant change in the pH was recorded.

With this challenge study we identified that the proposed combinations "FP1000 D1" and "FP1000 D2" demonstrated an immediate and efficient anti-fungal effect upon addition, and it controlled the outgrowth of the targeted yeast in the investigated product (regular Ranch dressing) over storage for at least 29 weeks at ambient temperature.

### APPLICATION STUDY - PET FOOD

The objective of the present study was to evaluate the influence of selected experimental blends on a pool of yeast and a pool of moulds in pet food palatant at pH 3.0 and pH 4.0. The experimental blend "FP1000" consisted of 0.95% allyl isothiocyanate from brown mustard, 7.5% catechins from green tea and 8 to 11% total organic acids from a propioniibacteria fermentate. The formulation was added at concentrations of 0.35% and 0.7% (w/w) to the application model.

Experimental results from the challenge study have shown that the here investigated antifungal formulation, "FP1000" had the potential to control the outgrowth of the inoculated yeast pool in the regular palatant at both tested pH levels when stored at 42 °C, thus competing with the industrial used antimicrobial. This also applied for the outgrowth of mould, which was suppressed by "FP 1000" in the higher pH product as compared to the unprotected control.

### Experimental set-up

Samples of pet food palatant at pH 3 and pH 4 without any preservation measure were provided by AFB International. The variables were designed with the intent of demonstrating the feasibility in terms of antifungal effectiveness of the conceptual antifungal at the proposed levels benchmarked against a preservative typically used by the industry. A batch of palatent (pH 4) containing commonly used concentrations of this preservative was also provided by AFB International.

Each batch was split (scheme table 30) in probes of 200 ml and placed in sterile jars. Probes of each batch were inoculated with the desired level of yeast, and 10 ml of each batch were inoculated with mould spores, respectively at a targeted inoculation rate of 500 to 1000 CFU/g.

The viscous products were thoroughly mixed (2 minutes) within 10 minutes of inoculation to ensure that the inoculum was evenly distributed throughout the product. All samples were incubated at 42 °C and assayed for outgrowth of yeast, plated on appropriate medium, until 6 weeks of storage or until visible mould growth, respectively. The test period was limited due to the provided volumes of the pet food palatant.

**Table 29**

| Batch | Antimicrobial | Concentration % (w/w) | pH | Indicator organism | CFU/g | Number of samples¹ |
|---|---|---|---|---|---|---|
| A | No antimicrobial | N/A | 3.0 | Mould | 1000 | 5 |
| | | | | Yeast | 1000 | 2 |
| | | | | | | |
| B | No antimicrobial | N/A | 4.0 | Mould | 1000 | 5 |
| | | | | Yeast | 1000 | 2 |
| | | | | | | |
| C | industrial antimicrobial | Unknown | 4.0 | Mould | 1000 | 5 |
| | | | | Yeast | 1000 | 2 |
| | | | | | | |
| D | FP 1000-C1 | 0.35 | 3.0 | Mould | 1000 | 5 |
| | | | | Yeast | 1000 | 2 |
| | | | | | | |
| E | FP 1000-C2 | 0.7 | 3.0 | Mould | 1000 | 5 |
| | | | | Yeast | 1000 | 2 |
| | | | | | | |
| F | FP 1000-C1 | 0.35 | 4.0 | Mould | 1000 | 5 |
| | | | | Yeast | 1000 | 2 |
| | | | | | | |
| G | FP 1000-C2 | 0.7 | 4.0 | Mould | 1000 | 5 |
| | | | | Yeast | 1000 | 2 |
| | | | | | | |

| | | | | | | |
|---|---|---|---|---|---|---|
| ¹ The same samples are analysed throughout the test period (open jar). | | | | | | |

### Preparation of bacterial cultures

The yeast and mould strains that were investigated in this challenge study are shown in table 32. In total 8 strains, from Danisco's in-house Culture Collection (DCS) (Danisco A/S, Brabrand, Denmark) were employed as 1 yeast and 1 mould pool in the respective pet food palatant. Originally, they were isolated e.g. from spoiled foods and pet food or obtained from official culture collections such as DMSZ and ATCC.

**Table 30: Investigate strains that were used as 1 yeast and 1 mould pool in this study.**

| Organism | Code | Isolated from |
|---|---|---|
| *Candida lipolytica* | DCS 1346 | food isolate |
| *Candida parapsilosis* | DCS 1090 | food isolate |
| *Candida parapsilosis* | DCS 787 | |
| *Candida albicans* | DCS 1289 | ATCC 9179 |
| *Aspergillus versicolor* | DCS 1069 | DSMZ 63292 |
| *Aspergillus niger* | DCS 1115 | pet food isolate |
| *Aspergillus niger* | DCS 1291 | ATCC 16404 |
| *Asperagillus niger* | DCS 1325 | DSMZ 737 |

Before each experiment, a stock culture of each yeast, maintained at -86°C in suitable broth containing glycerol 50% (v/v), was propagated through two consecutive growth cycles in suitable media (YGC-agar (VWR) pH 5.1 + 0.2; YM Broth (Becton, Dickinson and company) at pH 6.0 ± 0.2 at and temperature (25 °C). The overnight cultures are diluted in saline solution to obtain working cultures. A cocktail of the yeasts was generated by adding equal cell counts of each culture into a sterile container and mixed appropriately. The yeast cocktail was diluted and inoculated into the product in order to achieve the final desired concentration. Pool counts were verified via plate count.

Mould spores were prepared as follows: approx. 2 ml of sterile demineralised water was used to wash the spores off an out-grown mould cultivar (minimum 5 day old plate). This suspension is transferred to a sterile container. Pool counts were verified via plate count.

### Sample analysis

In order to have representative samples, the 2-phase-liquid palatant was always mixed before inoculation and sampling during the study. The inoculated pet food palatant stored at 42°C was assayed at time zero, and weekly thereafter until week 6. (The storage and sampling was limited by the volumes of palatant provided.) CFU/g was detected in duplicates for 2 samples from each batch inoculated with yeast. A portion of the sample was aseptically pulled from each jar, diluted 10fold in Ringers solution and plated with spiral plater technique on suitable agar. Samples assayed for yeast were incubated at 30°C for 48 hours on YGC-agar [AM-015].

5 samples from each batch inoculated with mould were visually analysed for mould growth. (Those samples with mould inoculation were not mixed.)

### Results

### Enumeration of Yeasts

Results from enumeration of yeasts in the experimental palatant during 6 weeks of storage are shown in table 31. The conventional preservation system as well as the experimental blend "FP 1000" did not allow an outgrowth of the target organism over the storage period at both pH levels. The unprotected batches at pH 3 and pH 4 on the other hand were considered as spoiled within week 2. However, it needs to be mentioned that the investigated pool of indicator yeasts seemed susceptible towards the low pH in the pH 3 product. Over time, the cell density decreased in all the samples including the unprotected control.

**Table 31: Cell counts on YGC-agar to determine the yeast growth after inoculation with 1,000 CFU/g over test period in the different pet food palatant batches.**

| **Batch** | | **Yeast on YGC-agar** | | | | | |
|---|---|---|---|---|---|---|---|
| | **pH** | **week 0** | **week1** | **week 2** | **week 3** | **week 4** | **week 6** |
| **A** | 3 | 1.65E+03 | 4.50E+03 | 2.50E+04 | 2.00E+03 | n.t. | n.t. |
| **B** | 4 | 1.35E+03 | 5.00E+05 | 1.70E+04 | 1.95E+05 | n.t. | n.t. |
| **C** | 4 | 1.50E+03 | <1.00E+02 | <1.00E+02 | <1.00E+02 | <1.00E+02 | <1.00E+02 |
| **D** | 3 | 1.65E+03 | <1.00E+02 | <1.00E+02 | <1.00E+02 | <1.00E+02 | <1.00E+02 |
| **E** | 4 | 1.35E+03 | <1.00E+02 | <1.00E+02 | <1.00E+02 | <1.00E+02 | <1.00E+02 |
| **F** | 3 | 1.65E+03 | <1.00E+02 | <1.00E+02 | <1.00E+02 | <1.00E+02 | <1.00E+02 |
| **G** | 4 | 1.35E+03 | <1.00E+02 | <1.00E+02 | <1.00E+02 | <1.00E+02 | <1.00E+02 |

| | | | | | | | |
|---|---|---|---|---|---|---|---|
| <1.00E+02CFU/g is the detection limit of the spiral plating method used | | | | | | | |

### Moulds

5 tubes of palatant per sample variant were monitored for visible outgrowth of mould. As can be seen in table 32, over the test period mould was only seen in the unprotected batch at pH 4.
None of the other samples provided a favourable environment for the mould outgrowth.

**Table 32: Mould growth in pet food palatant. Visible outgrowth of is documented as "x" no growth is reported as "-". (e.g. "xxxxx" 5 out of 5 tubes showed growth).**

| **Batch** | | **Moulds** | | | | | |
|---|---|---|---|---|---|---|---|
| | **pH** | **week 0** | **week 1** | **week 2** | **week 3** | **week 4** | **week 6** |
| **A** | 3 | ----- | ----- | ----- | ----- | ----- | ----- |
| **B** | 4 | ----- | xxxxx | n.t. | n.t. | n.t. | n.t. |
| **C** | 4 | ----- | ----- | ----- | ----- | ----- | ----- |
| **D** | 3 | ----- | ----- | ----- | ----- | ----- | ----- |
| **E** | 4 | ----- | ----- | ----- | ----- | ----- | ----- |
| **F** | 3 | ----- | ----- | ----- | ----- | ----- | ----- |
| **G** | 4 | ----- | ----- | ----- | ----- | ----- | ----- |

### Conclusions

The higher pH is a reduced hurdle for spoilage organisms and therefore more challenging to protect. An increase in yeast cell density was seen in the unpreserved control at pH 4 after one week of incubation.
The investigated pool of indicator yeasts seemed, however, susceptible towards the low pH in the pH 3 product. Over time, the cell density decreased in all the samples including the unprotected control.
However, both concentrations (0.35% and 0.7%) of the experimental blend ("FP 1000") containing green tea extract, mustard oil and a fermentate, were controlling the yeast contamination and prevented the product from spoilage at both pH levels. Thus competing with a preservative as typically used in the industry, where the test organisms did not grow within the test period.
The inoculated mould spores showed visible growth in the unprotected samples at pH 4 after 2 days.

### References

OHATA, Y.; MATSUI, Y.; OSAWA, T. AND KAWAKISHI, S.; 2004; Retarding effect of cyclodextrins on the decomposition of organic isothiocyanate in an aqueous solution; Bioscience biotechnology Biochemistry 68 (3), 671-675; 2004
ISAO KUBO,' HISAE MUROI, AND MASAKI HIMEJIMA; 1992; Antimicrobial Activity of green tea flavor components and their combination effects; J. Agric. Food Chem., 40 (2); 1992 YAM, T.S.; SHAH, S. AND HAMILTON MILLER, J.M.T.; 1997; Microbiological activity of whole and fractionated crude extracts of tea (Camellia sinensis), and of tea components; FEMS Microbiology Letters; 1997;
IKIGAI, H.; NAKAE, T.; HARA, Y. AND SHIMAMURA, T.; 1993; Bactericidal catechin damage the lipid bilayer; Biochimica et Biophysica Acta., 1993
KAJIYA, K.; HOJO, H. ; SUZUKI, M.; NANJO, F.; KUMAZAWA, S. AND NAKAYAMA, T.; 2004; Relationship between Antibacterial Activity of (+)-Catechin Derivatives and Their Interaction with a Model Membrane ; J. Agric. Food Chem., 52, 2004
LUND, B. M. AND EKLUND, T. KAJIYA; 2000; Control of pH and use of organic acids; Lund, B. M., Baird-Parker, T. C., Gould, G. W. (Ed.) Aspen Publishers Inc.: The microbiological safety and quality of food. pp. 175-199.; 2000
FREER, S.N.; 2002, Acetic acid production by Dekkera/Brettanomyces yeasts, Journal of Microbiology & Biotechnology 18; 2002.

Although the invention has been described in connection with specific preferred embodiments, it should be understood that the invention as claimed should not be unduly limited to such specific embodiments.

## Claims

1. A composition comprising
(a) allyl isothiocyanate; and
(b) an organic acid selected from acetic acid, propionic acid and mixtures thereof; and
(c) green tea [*Camellia sinensis*] extract.

2. A composition according to claim 1 wherein the organic acid is a mixture of acetic acid and propionic acid.

3. A composition according to claim 1 or 2 wherein the green tea extract is a compound selected from 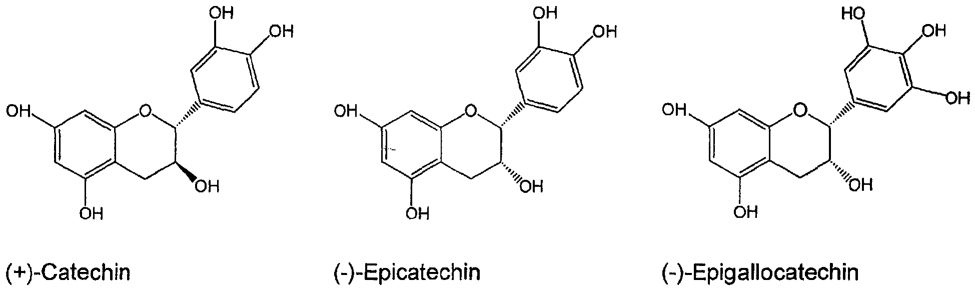 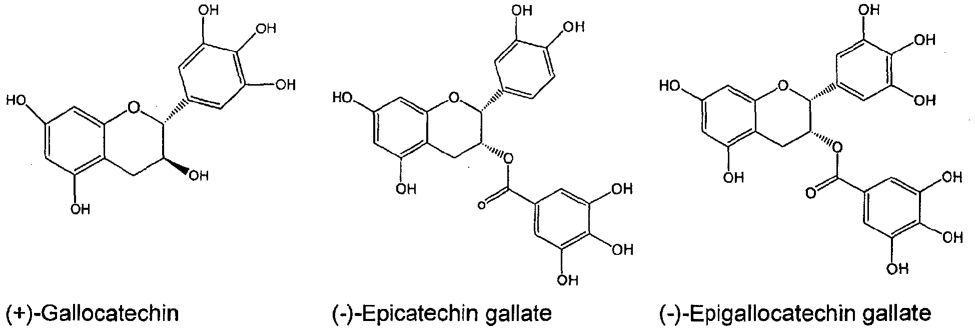 and mixtures thereof.

4. A composition according to claim 1, 2 or 3 wherein the composition comprises the allyl isothiocyanate in an amount of at least 0.1 wt% based on the composition.

5. A composition according to any one of the preceding claims wherein the composition comprises the organic acid in an amount of at least 3 wt% based on the composition.

6. A composition according to any one of the preceding claims wherein the composition comprises acetic acid in an amount of at least 2 wt% based on the composition.

7. A composition according to any one of the preceding claims wherein the composition comprises propionic acid in an amount of at least 0.5 wt% based on the composition.

8. A composition according to any one of the preceding claims wherein the composition comprises the green tea extract in an amount of at least 1,0 wt% based on the composition.

9. A composition according to any one of the preceding claims wherein the composition comprises
- allyl isothiocyanate in an amount of at least 0.1 wt% based on the composition;
- acetic acid in an amount of at least 2 wt% based on the composition;
- propionic acid in an amount of at least 0.5 wt% based on the composition; and
- green tea extract in an amount of at least 1.0 wt% based on the composition.

10. A composition according to any one of the preceding claims wherein the composition further comprises an emulsifier selected from polysorbates, monoglycerides, diglycerides, acetic acid esters of mono-diglycerides, tartaric acid esters of mono-diglycerides and citric acid esters of mono-diglycerides.

11. A composition according to any one of the preceding claims wherein the composition further comprises a chelator selected from EDTA, citric acid, monophosphates, diphosphates, triphosphates and polyphosphates.

12. A foodstuff comprising an antimicrobial protectant composition according to any one of the preceding claims.

13. A process for preventing and/or inhibiting the growth of, and/or killing a micro-organism in a material, the process comprising the step of contacting the material with
(a) allyl isothiocyanate;
(b) an organic acid selected from acetic acid, propionic acid and mixtures thereof; and
(c) green tea [*Camellia sinensis*] extract

14. Use of
(a) allyl isothiocyanate;
(b) an organic acid selected from acetic acid, propionic acid and mixtures thereof; and
(c) green tea [*Camellia sinensis*] extract;
for preventing and/or inhibiting the growth of, and/or killing a micro-organism in a material.

15. A kit for preparing a composition as defined in any one of claims 1 to 11, the kit comprising
(a) allyl isothiocyanate;
(b) an organic acid selected from acetic acid, propionic acid and mixtures thereof; and
(c) green tea [*Camellia sinensis*] extract
in separate packages or containers; optionally with instructions for admixture and/or contacting and/or use.

## Patentansprüche

1. Zusammensetzung, umfassend
(a) Allylisothiocyanat und
(b) eine organische Säure ausgewählt aus Essigsäure, Propionsäure und Mischungen davon und
(c) einen Extrakt von grünem Tee [*Camellia sinensis*]*.*

2. Zusammensetzung nach Anspruch 1, wobei es sich bei der organischen Säure um eine Mischung von Essigsäure und Propionsäure handelt.

3. Zusammensetzung nach Anspruch 1 oder 2, wobei es sich bei dem Extrakt von grünem Tee um eine aus 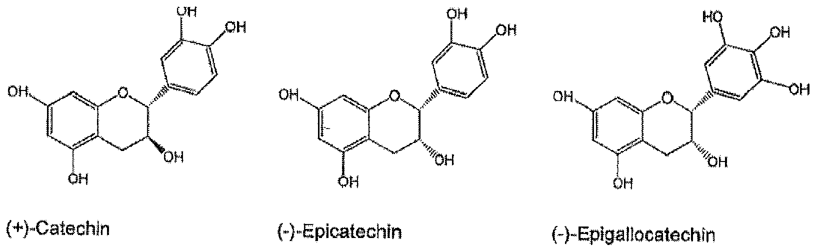 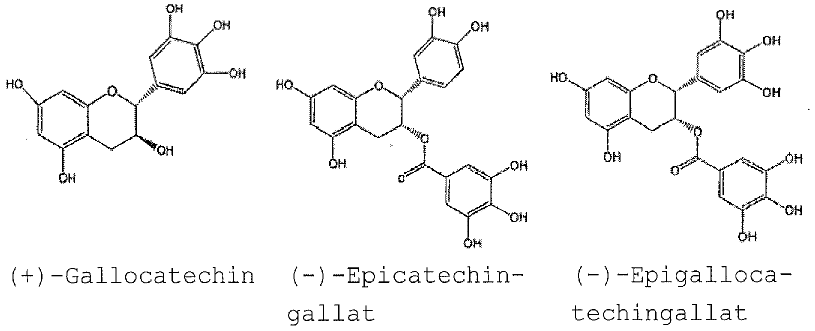 und Mischungen davon ausgewählte Verbindung handelt.

4. Zusammensetzung nach Anspruch 1, 2 oder 3, wobei die Zusammensetzung das Allylisothiocyanat in einer Menge von mindestens 0,1 Gew.-%, basierend auf der Zusammensetzung, umfasst.

5. Zusammensetzung nach einem der vorherigen Ansprüche, wobei die Zusammensetzung die organische Säure in einer Menge von mindestens 3 Gew.-%, basierend auf der Zusammensetzung, umfasst.

6. Zusammensetzung nach einem der vorherigen Ansprüche, wobei die Zusammensetzung Essigsäure in einer Menge von mindestens 2 Gew.-%, basierend auf der Zusammensetzung, umfasst.

7. Zusammensetzung nach einem der vorherigen Ansprüche, wobei die Zusammensetzung Propionsäure in einer Menge von mindestens 0,5 Gew.-%, basierend auf der Zusammensetzung, umfasst.

8. Zusammensetzung nach einem der vorherigen Ansprüche, wobei die Zusammensetzung den Extrakt von grünem Tee in einer Menge von mindestens 1,0 Gew.-%, basierend auf der Zusammensetzung, umfasst.

9. Zusammensetzung nach einem der vorherigen Ansprüche, wobei die Zusammensetzung
- Allylisothiocyanat in einer Menge von mindestens 0,1 Gew.-%, basierend auf der Zusammensetzung;
- Essigsäure in einer Menge von mindestens 2 Gew.-%, basierend auf der Zusammensetzung;
- Propionsäure in einer Menge von mindestens 0,5 Gew.-%, basierend auf der Zusammensetzung, und
- Extrakt von grünem Tee in einer Menge von mindestens 1,0 Gew.-%, basierend auf der Zusammensetzung,
umfasst.

10. Zusammensetzung nach einem der vorherigen Ansprüche, wobei die Zusammensetzung weiterhin einen aus Polysorbaten, Monoglyceriden, Diglyceriden, Essigsäureestern von Monodiglyceriden, Weinsäureestern von Monodiglyceriden und Zitronensäureestern von Monodiglyceriden ausgewählten Emulgator umfasst.

11. Zusammensetzung nach einem der vorherigen Ansprüche, wobei die Zusammensetzung weiterhin einen aus EDTA, Zitronensäure, Monophosphaten, Diphosphaten, Triphosphaten und Polyphospaten ausgewählten Chelator umfasst.

12. Nahrungsmittel, umfassend eine antimikrobiell schützende Zusammensetzung nach einem der vorhergehenden Ansprüche.

13. Verfahren zur Prävention und/oder Inhibierung des Wachstums von und/oder zum Abtöten eines Mikroorganismus in einem Material, wobei das Verfahren den Schritt des Inkontaktbringens des Materials mit
(a) Allylisothiocyanat;
(b) einer organischen Säure ausgewählt aus Essigsäure, Propionsäure und Mischungen davon und
(c) einem Extrakt von grünem Tee [*Camellia sinensis*] umfasst.

14. Verwendung von
(a) Allylisothiocyanat;
(b) einer organischen Säure ausgewählt aus Essigsäure, Propionsäure und Mischungen davon und
(c) einem Extrakt von grünem Tee [*Camellia sinensis*] zum Verhindern und/oder Inhibieren des Wachstums von und/oder zum Abtöten eines Mikroorganismus in einem Material.

15. Kit zur Herstellung einer wie in einem der Ansprüche 1-11 definierten Zusammensetzung, wobei das Kit
(a) Allylisothiocyanat;
(b) eine organische Säure ausgewählt aus Essigsäure, Propionsäure und Mischungen davon und
(c) einen Extrakt von grünem Tee [*Camellia sinensis*] in getrennten Packungen bzw. Behältnissen umfasst, gegebenenfalls mit Anweisungen zum Zusammenmischen und/oder zum Inkontaktbringen und/oder zur Verwendung.

## Revendications

1. Composition comprenant
(a) de l'isothiocyanate d'allyle ; et
(b) un acide organique choisi parmi l'acide acétique, l'acide propionique et des mélanges de ceux-ci ; et
(c) un extrait de thé vert [*Camellia sinensis*]*.*

2. Composition selon la revendication 1 dans laquelle l'acide organique est un mélange d'acide acétique et d'acide propionique.

3. Composition selon la revendication 1 ou 2 dans laquelle l'extrait de thé vert est un composé choisi parmi 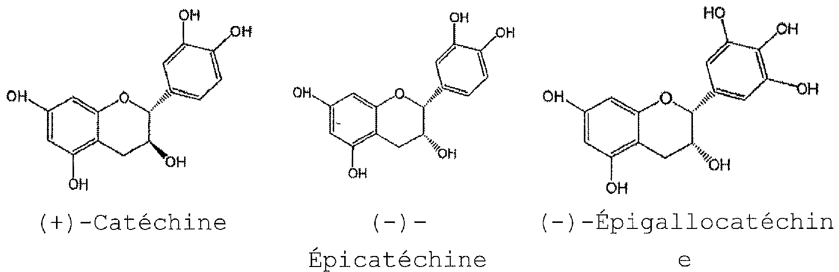 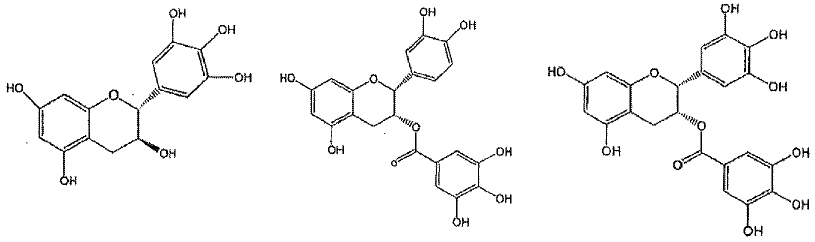 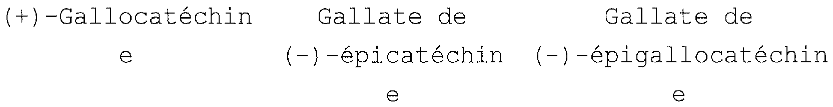 et des mélanges de ceux-ci.

4. Composition selon la revendication 1, 2 ou 3, la composition comprenant l'isothiocyanate d'allyle en une quantité d'au moins 0,1 % en poids sur la base de la composition.

5. Composition selon l'une quelconque des revendications précédentes, la composition comprenant l'acide organique en une quantité d'au moins 3 % en poids sur la base de la composition.

6. Composition selon l'une quelconque des revendications précédentes, la composition comprenant de l'acide acétique en une quantité d'au moins 2 % en poids sur la base de la composition.

7. Composition selon l'une quelconque des revendications précédentes, la composition comprenant de l'acide propionique en une quantité d'au moins 0,5 % en poids sur la base de la composition.

8. Composition selon l'une quelconque des revendications précédentes, la composition comprenant l'extrait de thé vert en une quantité d'au moins 1,0 % en poids sur la base de la composition.

9. Composition selon l'une quelconque des revendications précédentes, la composition comprenant :
- de l'isothiocyanate d'allyle en une quantité d'au moins 0,1 % en poids sur la base de la composition ;
- de l'acide acétique en une quantité d'au moins 2 % en poids sur la base de la composition ;
- de l'acide propionique en une quantité d'au moins 0,5 % en poids sur la base de la composition ; et
- de l'extrait de thé vert en une quantité d'au moins 1,0 % en poids sur la base de la composition.

10. Composition selon l'une quelconque des revendications précédentes, la composition comprenant en outre un émulsifiant choisi parmi des polysorbates, des monoglycérides, des diglycérides, des esters d'acide acétique de mono-diglycérides, des esters d'acide tartrique de mono-diglycérides et des esters d'acide citrique de mono-diglycérides.

11. Composition selon l'une quelconque des revendications précédentes, la composition comprenant en outre un chélateur choisi parmi l'EDTA, l'acide citrique, des monophosphates, des diphosphates, des triphosphates et des polyphosphates.

12. Article alimentaire comprenant une composition protectrice antimicrobienne selon l'une quelconque des revendications précédentes.

13. Procédé pour prévenir et/ou inhiber la croissance de, et/ou tuer un micro-organisme dans un matériau, le procédé comprenant l'étape de mise en contact du matériau avec
(a) de l'isothiocyanate d'allyle ;
(b) un acide organique choisi parmi l'acide acétique, l'acide propionique et des mélanges de ceux-ci ; et
(c) un extrait de thé vert [*Camellia sinensis*]*.*

14. Utilisation de
(a) isothiocyanate d'allyle ; et
(b) un acide organique choisi parmi l'acide acétique, l'acide propionique et des mélanges de ceux-ci ; et
(c) un extrait de thé vert [*Camellia sinensis*] ;
pour prévenir et/ou inhiber la croissance de, et/ou tuer un micro-organisme dans un matériau.

15. Kit pour préparer une composition telle que définie dans l'une quelconque des revendications 1 à 11, le kit comprenant
(a) de l'isothiocyanate d'allyle ;
(b) un acide organique choisi parmi l'acide acétique, l'acide propionique et des mélanges de ceux-ci ; et
(c) un extrait de thé vert [*Camellia sinensis*] dans des emballages ou des récipients séparés ; facultativement avec des instructions pour mélange et/ou mise en contact et/ou utilisation.
